(19) Europäisches Patentamt
European Patent Office
Office européen des brevets

(11) **EP 4 782 967 A1**

(12) **EUROPEAN PATENT APPLICATION**
published in accordance with Art. 153(4) EPC

(43) Date of publication:
29.07.2026 Bulletin 2026/31

(21) Application number: 23957265.4

(22) Date of filing: 02.11.2023

(51) International Patent Classification (IPC):
*G06F 3/01* (2006.01)

(52) Cooperative Patent Classification (CPC):
G06F 3/01

(86) International application number:
PCT/CN2023/129397

(87) International publication number:
WO 2025/091395 (08.05.2025 Gazette 2025/19)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: Honor Device Co., Ltd.
Shenzhen, Guangdong 518040 (CN)

(72) Inventors:
• ZHU, Jianwei
Shenzhen, Guangdong 518040 (CN)
• WANG, Lei
Shenzhen, Guangdong 518040 (CN)

(74) Representative: MERH-IP Matias Erny Reichl
Hoffmann
Patentanwälte PartG mbB
Paul-Heyse-Straße 29
80336 München (DE)

(54) **PRESSING FEEDBACK APPARATUS AND METHOD, AND ELECTRONIC DEVICE**

(57) This application discloses a pressing feedback apparatus and method, and an electronic device. The pressing feedback apparatus includes a support member, a pressing member, a pressure detection module, and a control module. Two ends of the support member are fixed to the middle frame. The pressing member is arranged on a side of the support member. A magnetic component includes a first magnetic body and a second magnetic body. The first magnetic body and the second magnetic body are arranged opposite to each other, and are both arranged on a side of the support member facing away from the pressing member. The pressure detection module is arranged on the support member, and is con-

figured to generate an electrical signal corresponding to deformation of the support member. The control module is configured to adjust a drive current of a first magnetic body and/or a second magnetic body based on the electrical signal, to adjust an acting force generated between the first magnetic body and the second magnetic body. Different acting forces act on the support member, which may drive the support member to generate a corresponding position change, and may generate different acting forces on a hand of a user, to provide, in a timely manner, different pressing feedback corresponding to the pressing member being subjected to different pressures, achieving good user experience.

A-A

FIG. 7

Processed by Luminess, 75001 PARIS (FR)

## Description

## TECHNICAL FIELD

This application relates to the technical field of terminal devices, and in particular, to a pressing feedback apparatus and method, and an electronic device.

## BACKGROUND

With the development of communication technologies of terminal devices, electronic devices such as a mobile phone, a tablet computer, and a smartwatch are gradually used. To help a user control the electronic device, a plurality of buttons are provided in the electronic device.

In a conventional mechanical button, a button cap is pressed through a finger, and mechanical deformation/displacement is performed on the button cap, causing displacement of a joint and a metal dome (Dome) switch that are connected below the button cap. After an electrical signal is triggered to a system, an operation of button press is detected. The mechanical button may achieve a pressing and rebound effect through the metal dome switch, to provide tactile feedback for the user.

However, if the button is pressed in a small force, the metal dome switch may not or slightly displace, which not only provides no tactile feedback or little tactile feedback, but also may cause that the button operation cannot be detected. If the button is pressed in a large force, a relatively large displacement is generated on the metal dome switch. The metal dome switch is easily crushed, causing a problem of slow rebound, and tactile feedback cannot be provided in a timely manner. It can be seen that under different pressing forces, an existing button easily has a problem that the tactile feedback cannot be provided in a timely manner, resulting in relatively poor user experience.

## SUMMARY

This application provides a pressing feedback apparatus and method, and an electronic device, to resolve a problem that a button cannot provide tactile feedback in a timely manner under different pressing forces.

According to a first aspect, this application provides a pressing feedback apparatus, which is applied to an electronic device. The electronic device includes a middle frame that defines an accommodating cavity. The middle frame is provided with an assembly hole. The assembly hole is in communication with the accommodating cavity. The pressing feedback apparatus includes a support member, a pressing member, a magnetic component, a pressure detection module, and a control module. Two ends of the support member are fixed to a periphery of the assembly hole. The pressing member is arranged on a side of the support member facing away from the accommodating cavity. A magnetic component is located in the accommodating cavity. The magnetic component includes a first magnetic body and a second magnetic body. The first magnetic body is arranged on a side of the support member facing away from the pressing member. The second magnetic body is arranged on a side of the first magnetic body facing away from the support member, and is located opposite to the first magnetic body. The second magnetic body is fixedly arranged relative to the middle frame. The pressure detection module is arranged on the support member, and the pressure detection module is configured to generate an electrical signal corresponding to deformation of the support member. The control module is electrically connected to the pressure detection module, and is electrically connected to at least one of the first magnetic body or the second magnetic body, where the control module is configured to adjust a drive current of the first magnetic body and/or the second magnetic body based on the electrical signal, to adjust an acting force generated between the first magnetic body and the second magnetic body.

The pressing feedback apparatus provided in embodiments of this application may simulate a mechanical button, and implement pressing feedback. After the user presses and/or lifts the pressing member, the operation performed by the user on the pressing member causes the support member to deform, and the pressure detection module detects the deformation and generates a corresponding electrical signal that is sent to the control module. The control module adjusts the drive current of the first magnetic body and the second magnetic body based on the electrical signal, to adjust the acting force generated between the first magnetic body and the second magnetic body. Different acting forces act on the support member, may drive the support member to generate a corresponding position change, and may generate different acting forces on a hand of a user, to provide, in a timely manner, different pressing feedback effects corresponding to the pressing member being subjected to different pressures. In this way, under different pressing forces, the pressing feedback apparatus can provide tactile feedback in a timely manner, achieving good user experience.

In an implementation, when the pressing member is not subjected to a pressure, the second magnetic body and the first magnetic body are spaced apart from each other and oppositely arranged. In this way, the first magnetic body and the second magnetic body can be facilitated to perform an attraction action when receiving the current signal, to provide the pressing feedback corresponding to the attraction action.

In an implementation, the control module is configured to determine, based on the electrical signal, a value of a pressure applied to the pressing member. The control module is configured to adjust a magnitude of the drive current of the first magnetic body and/or the second magnetic body based on a change of the pressure value, to adjust a magnitude of the acting force; and/or the control module is configured to adjust a direction of the drive current of the first magnetic body and/or the second magnetic body based on the change of the pressure value, to adjust a direction of the acting force. In this way, the control module may determine different magnitude of drive current based on different pressure values, and may determine whether the pressing member is in a phase of being pressed or a phase of being lifted after being pressed based on the change of the pressure value, to adjust the magnitude and the direction of the drive current of the first magnetic body and/or the second magnetic body. Further, the control module may change the magnitude and the direction of the acting force between the first magnetic body and the second magnetic body, to provide different pressing feedback.

In an implementation, the control module is configured to increase, in response to an increase in the pressure value, the drive current of the first magnetic body and/or the second magnetic body, to increase the acting force. The control module is configured to reduce, in response to a decrease in the pressure value, the drive current of the first magnetic body and/or the second magnetic body, to reduce the acting force, and/or change the direction of the drive current of the first magnetic body and/or the second magnetic body, to change the direction of the acting force. In this way, corresponding pressing feedback when the pressing member is pressed may be provided, or corresponding pressing feedback when the pressing member is pressed and lifted may be provided.

In an implementation, the control module is configured to: output the drive current to the first magnetic body and/or the second magnetic body in response to the pressure value being greater than a first pressure threshold, so that an attractive force is generated between the first magnetic body and the second magnetic body, to enable the first magnetic body to move toward the second magnetic body; increase the drive current of the first magnetic body and the second magnetic body in response to the pressure value being greater than the first pressure threshold and increasing, so that the attractive force is increased; reduce the drive current of the first magnetic body and/or the second magnetic body in response to the pressure value reaching a maximum value and starting to decrease, so that the attractive force is reduced; and stop outputting the drive current to the first magnetic body and the second magnetic body in response to the pressure value decreasing to the first pressure threshold, so that the acting force between the first magnetic body and the second magnetic body is zero. In this way, the acting force between the first magnetic body and the second magnetic body may be changed in real time based on a change of the pressure value, to provide different pressing feedback effects to the user in real time.

In an implementation, the control module is configured to: output the drive current to the first magnetic body and the second magnetic body in response to the pressure value being greater than a second pressure threshold, so that an attractive force is generated between the first magnetic body and the second magnetic body, to enable the first magnetic body to move toward the second magnetic body; increase the drive current of the first magnetic body and the second magnetic body in response to the pressure value being greater than the second pressure threshold and increasing, so that the attractive force is increased; reduce, in response to the pressure value reaching a maximum value and starting to decrease, the drive current of one of the first magnetic body and the second magnetic body to a first current threshold, and maintain the drive current of the other unchanged, so that the attractive force is reduced; reversely increase the drive current of one of the first magnetic body and the second magnetic body in response to the pressure value decreasing to a third pressure threshold, and maintain the drive current of the other unchanged, so that a repulsive force is generated between the first magnetic body and the second magnetic body, and the repulsive force is increased, to enable the first magnetic body to move away from the second magnetic body; reduce the drive current of the first magnetic body and the second magnetic body in response to the pressure value continuing to decrease to a fourth pressure threshold, so that the repulsive force is reduced; and stop outputting the drive current to the first magnetic body and the second magnetic body in response to the pressure value decreasing to the second pressure threshold, so that the acting force between the first magnetic body and the second magnetic body is zero. In this way, the process of changing the pressure value generated by pressing the pressing member is divided into a plurality of phases, so that the magnitude and the direction of the acting force between the first magnetic body and the second magnetic body can be adjusted more accurately based on the change of the pressure value, to provide corresponding different pressing feedback in a process of pressing the pressing member to the user at a time in a more timely manner and accurately.

In an implementation, the control module is configured to: start to output a first drive current to the first magnetic body and output a second drive current to the second magnetic body in response to the pressure value increasing to a fifth pressure threshold, so that an attractive force is generated between the first magnetic body and the second magnetic body, the first magnetic body moves toward the second magnetic body, and the first drive current and the second drive current have fixed current values; maintain output of the first drive current to the first magnetic body and maintain output of the second drive current to the second magnetic body in response to the pressure value being greater than the fifth pressure threshold and increasing, so that the attractive force remains unchanged; maintain, in response to the pressure value reaching a maximum value and starting to decrease, the drive current outputted to one of the first magnetic body and the second magnetic body, and change a direction of the drive current outputted to the other, so that a repulsive force is generated between the first magnetic body and the second magnetic body, and the first magnetic body moves away from the second magnetic body; and stop outputting the drive current to the first magnetic body and the second magnetic body in response to the pressure value decreasing to a sixth pressure threshold, so that the acting force between the first magnetic body and the second magnetic body is zero, where the sixth pressure threshold is less than or equal to the fifth pressure threshold. In this way, the magnitude and the direction of the acting force between the first magnetic body and the second magnetic body can be adjusted more accurately based on the change of the pressure value generated by pressing the pressing member, so as to provide corresponding different pressing feedback in the process of pressing the pressing member to the user at a time in a more timely manner and accurately.

In an implementation, the magnetic component further includes a housing, and the housing is fixedly arranged relative to the middle frame. The second magnetic body is fixedly arranged in the housing. The housing and the support member define a cavity. The first magnetic body and the second magnetic body are located in the cavity. In this way, the second magnetic body is facilitated to be fixed through the housing, so that the first magnetic body and the second magnetic body can be facilitated to perform the attraction action when the current signal is received.

In an implementation, the pressing member includes two guide posts. The two guide posts are respectively arranged on two ends of the pressing member along a length direction of the support member. The pressing member is fixed to the support member through the two guide posts. In this way, the two guide posts can be used to evenly transmit the pressure to the support member.

In an implementation, the magnetic component further includes two fixing members. The two fixing members are respectively arranged on two ends of the housing along a length direction of the support member, and the housing is fixed to the two ends of the support member through the two fixing members. In this way, stability of the housing and the support member can be improved.

In an implementation, the support member includes a first cantilever beam, a second cantilever beam, and a support. The support is located between the first cantilever beam and the second cantilever beam, one end of the first cantilever beam is fixed to one end of the assembly hole, and an other end of the first cantilever beam is connected to the support. One end of the second cantilever beam is fixed to an other end of the assembly hole, and an other end of the second cantilever beam is connected to the support. The first magnetic body is fixed to the support. In this way, the support member is facilitated to deform more easily when the force is applied, thereby improving a subsequent pressing feedback effect.

In an implementation, the pressure detection module includes a first pressure detection module and a second pressure detection module, and the first pressure detection module and the second pressure detection module are respectively located on two ends of the support member in the length direction. In this way, electrical signals generated by the pressure detection modules at different positions can accurately represent pressures of the pressing member, so that the control module can accurately input the drive current to the first magnetic body and the second magnetic body, and the first magnetic body and the second magnetic body can accurately attract or repel each other, and generate different magnitudes of acting forces. The corresponding pressing feedback is provided when the pressing member is pressed or when the pressing member is pressed and lifted.

According to a second aspect, this application provides a pressing feedback method, which is applied to the pressing feedback apparatus in the first aspect. The pressing feedback method includes: The pressure detection module generates, in response to detection of deformation of the support member caused when a user presses the pressing member, an electrical signal corresponding to the deformation of the support member, and sends the electrical signal to the control module. The control module adjusts a drive current of a first magnetic body and/or a second magnetic body based on the electrical signal, to adjust an acting force generated between the first magnetic body and the second magnetic body.

Based on the pressing feedback apparatus, the pressing feedback method provided in embodiments of this application may simulate a mechanical button, and implement pressing feedback. After the user presses and/or lifts the pressing member, the pressure detection module detects the deformation and generates a corresponding electrical signal that is sent to the control module when the operation performed by the user on the pressing member causes the support member to deform. The control module adjusts the drive current of the first magnetic body and the second magnetic body based on the electrical signal, to adjust the acting force generated between the first magnetic body and the second magnetic body. The acting forces act on the support member, which may drive the support member to generate a corresponding position change, and may generate different acting forces on a hand of the user, to provide, in a timely manner, different pressing feedback corresponding to the pressing member being subjected to different pressures. In this way, under different pressing forces, the pressing feedback method can provide tactile feedback in a timely manner, achieving good user experience.

In an implementation, the adjusting a drive current of a first magnetic body and/or a second magnetic body based on the electrical signal includes: The control module, based on the electrical signal, determines a value of a pressure applied to the pressing member; the control module adjusts a magnitude of the drive current of the first magnetic body and/or the second magnetic body based on a change of the pressure value, to adjust a magnitude of the acting force; and/or the control module adjusts a direction of the drive current of the first magnetic body and/or the second magnetic body based on the change of the pressure value, to adjust a direction of the acting force. In this way, the control module may determine different magnitude of drive current based on different pressure values, and may determine whether the pressing member is in a phase of being pressed or a phase of being lifted after being pressed based on the change of the pressure value, to adjust the magnitude and the direction of the drive current of the first magnetic body and/or the second magnetic body. Further, the control module may change the magnitude and the direction of the acting force between the first magnetic body and the second magnetic body, to provide different pressing feedback.

In an implementation, the adjusting a drive current of a first magnetic body and/or a second magnetic body based on the electrical signal includes: The control module increases the drive current of the first magnetic body and/or the second magnetic body in response to an increase in the pressure value, to increase the acting force. The control module reduces the drive current of the first magnetic body and/or the second magnetic body in response to a decrease in the pressure value, to reduce the acting force, and/or changes the direction of the drive current of the first magnetic body and/or the second magnetic body, to change the direction of the acting force. In this way, corresponding pressing feedback when the pressing member is pressed may be provided, and/or corresponding pressing feedback when the pressing member is pressed and lifted may be provided.

In an implementation, the adjusting a drive current of a first magnetic body and/or a second magnetic body based on the electrical signal, to adjust the acting force generated between the first magnetic body and the second magnetic body includes: The control module outputs the drive current to the first magnetic body and the second magnetic body in response to the pressure value being greater than a first pressure threshold, so that an attractive force is generated between the first magnetic body and the second magnetic body, to enable the first magnetic body to move toward the second magnetic body. The control module increases the drive current of the first magnetic body and the second magnetic body in response to the pressure value being greater than the first pressure threshold and increasing, so that the attractive force is increased. The control module reduces the drive current of the first magnetic body and/or the second magnetic body in response to the pressure value reaching a maximum value and starting to decrease, so that the attractive force is reduced. The control module stops outputting the drive current to the first magnetic body and the second magnetic body in response to the pressure value decreasing to the first pressure threshold, so that the acting force between the first magnetic body and the second magnetic body is zero. In this way, the magnitude and direction of the acting force generated between the first magnetic body and the second magnetic body may be changed in real time based on the change of the pressure value, to provide different pressing feedback effects to the user in real time.

In an implementation, the adjusting a drive current of a first magnetic body and/or a second magnetic body based on the electrical signal, to adjust the acting force generated between the first magnetic body and the second magnetic body includes: The control module outputs the drive current to the first magnetic body and the second magnetic body in response to the pressure value being greater than a second pressure threshold, so that an attractive force is generated between the first magnetic body and the second magnetic body, to enable the first magnetic body to move toward the second magnetic body. The control module increases the drive current of the first magnetic body and the second magnetic body in response to the pressure value being greater than the second pressure threshold and increasing, so that the attractive force is increased. The control module reduces, in response to the pressure value reaching a maximum value and starting to decrease, the drive current of one of the first magnetic body and the second magnetic body to a first current threshold, and maintain the drive current of the other unchanged, so that the attractive force is reduced. The control module reversely increases the drive current of one of the first magnetic body and the second magnetic body in response to the pressure value decreasing to a third pressure threshold, and maintains the drive current of the other unchanged, so that a repulsive force is generated between the first magnetic body and the second magnetic body, and the repulsive force is increased, to enable the first magnetic body to move away from the second magnetic body. The control module reduces the drive current of the first magnetic body and the second magnetic body in response to the pressure value continuing to decrease to a fourth pressure threshold, so that the repulsive force is reduced. The control module stops outputting the drive current to the first magnetic body and the second magnetic body in response to the pressure value decreasing to the second pressure threshold, so that the acting force between the first magnetic body and the second magnetic body is zero. In this way, the process of changing the pressure value generated by pressing the pressing member is divided into a plurality of phases, so that the magnitude and the direction of the acting force between the first magnetic body and the second magnetic body can be adjusted more accurately based on the change of the pressure value, to provide corresponding different pressing feedback in a process of pressing the pressing member to the user at a time in a more timely manner and accurately.

In an implementation, the adjusting a drive current of a first magnetic body and/or a second magnetic body based on the electrical signal, to adjust the acting force generated between the first magnetic body and the second magnetic body includes: The control module starts to output, in response to the pressure value increasing to a fifth pressure threshold, a first drive current to the first magnetic body, and outputs a second drive current to the second magnetic body, so that an attractive force is generated between the first magnetic body and the second magnetic body, the first magnetic body moves toward the second magnetic body, and the first drive current and the second drive current have fixed current values. The control module maintains output of the first drive current to the first magnetic body and maintains output of the second drive current to the second magnetic body in response to the pressure value being greater than the fifth pressure threshold and increasing, so that the attractive force remains unchanged. The control module maintains, in response to the pressure value reaching a maximum value and starting to decrease, the drive current outputted to one of the first magnetic body and the second magnetic body, and changes a direction of the drive current outputted to the other, so that a repulsive force is generated between the first magnetic body and the second magnetic body, and the first magnetic body moves away from the second magnetic body. The control module stops outputting the drive current to the first magnetic body and the second magnetic body in response to the pressure value decreasing to a sixth pressure threshold, so that the acting force between the first magnetic body and the second magnetic body is zero, where the sixth pressure threshold is less than or equal to the fifth pressure threshold. In this way, the magnitude and the direction of the acting force between the first magnetic body and the second magnetic body can be adjusted more accurately based on the change of the pressure value generated by pressing the pressing member, so as to provide corresponding different pressing feedback in the process of pressing the pressing member to the user at a time in a more timely manner and accurately.

In an implementation, that the pressure detection module generates an electrical signal corresponding to the deformation of the support member, and sending the electrical signal to a control module includes: The first pressure detection module generates a first electrical signal corresponding to the deformation of the support member, and sends the first electrical signal to the control module. The second pressure detection module generates a second electrical signal corresponding to the deformation of the support member, and sends the second electrical signal to the control module. In addition, that the control module determines a value of a pressure applied to the pressing member based on the electrical signal includes: The control module determines a value of a pressure applied to the pressing member based on the first electrical signal and the second electrical signal.

In this way, electrical signals generated by the pressure detection modules at different positions can accurately represent pressures of the pressing member, so that the control module can accurately input the drive current to the first magnetic body and the second magnetic body, and the first magnetic body and the second magnetic body can accurately attract or repel each other, and generate acting forces of different magnitudes and directions. The corresponding pressing feedback is provided when the pressing member is pressed or when the pressing member is pressed and lifted.

According to a third aspect, an embodiment of this application further provides an electronic device, including: a middle frame, where the middle frame defines an accommodating cavity, and the middle frame is provided with an assembly hole; a display screen and a rear housing, arranged on two opposite sides of the middle frame; and the pressing feedback apparatus in the first aspect, where two ends of a support member of the pressing feedback apparatus are fixed to a periphery of the assembly hole.

According to a fourth aspect, an embodiment of this application provides an electronic device, including a memory and a processor. The memory stores program instructions. The program instructions, when executed by the processor, cause the electronic device to perform the pressing feedback method in the second aspect.

According to a fifth aspect, an embodiment of this application further provides a computer-readable storage medium. The computer-readable storage medium stores instructions. The instructions, when run on a computer, cause the computer to perform the methods of the foregoing aspects and various implementations thereof.

According to a sixth aspect, an embodiment of this application further provides a computer program product including instructions. The computer program product, when run on a computer, causes the computer to perform the methods of the foregoing aspects and various implementations thereof.

According to a seventh aspect, an embodiment of this application further provides a chip system. The chip system includes a processor, which is configured to support the terminal device to implement the function related in the foregoing aspect, for example, generate or process information related in the foregoing method.

It may be understood that the electronic device, the computer-readable storage medium, the computer program product, and the chip system provided in the foregoing aspects are all applied to the corresponding method provided above. Therefore, for beneficial effects that can be achieved by the electronic device, the computer storage medium, the computer program product, and the chip system, reference may be made to beneficial effects in the foregoing corresponding method. Details are not described herein again.

**BRIEF DESCRIPTION OF DRAWINGS**

To more clearly describe technical solutions in this application, the accompanying drawings required for describing embodiments are briefly described below. Apparently, a person of ordinary skill in the art may still derive other accompanying drawings from these accompanying drawings without any creative effort.

FIG. 1 is a schematic structural diagram of an electronic device 100A according to an embodiment of this application;

FIG. 2 is a schematic diagram of different pressing states of a mechanical button 30;

FIG. 3 is a first schematic structural diagram of a pressing feedback apparatus 40 according to an embodiment of this application;

FIG. 4 is a first side view of a pressing feedback apparatus 40 according to an embodiment of this application;

FIG. 5 is a structural block diagram of a pressing feedback apparatus 40 according to an embodiment of this application;

FIG. 6 is a first top view of a pressing feedback apparatus 40 according to an embodiment of this application;

FIG. 7 is a schematic structural diagram of a section A-A in FIG. 6;

FIG. 8 is a first schematic structural diagram of a support member 100 according to an embodiment of this application;

FIG. 9 is a first schematic structural diagram of a pressing feedback apparatus 40 and a middle frame 10 according to an embodiment of this application;

FIG. 10 is a second schematic structural diagram of a pressing feedback apparatus 40 according to an embodiment of this application;

FIG. 11 is a second side view of a pressing feedback apparatus 40 according to an embodiment of this application;

FIG. 12 is a second top view of a pressing feedback apparatus 40 according to an embodiment of this application;

FIG. 13 is a schematic structural diagram of a section B-B in FIG. 12;

FIG. 14 is a second schematic structural diagram of a support member 100 according to an embodiment of this application;

FIG. 15 is a second schematic structural diagram of a pressing feedback apparatus 40 and a middle frame 10 according to an embodiment of this application;

FIG. 16 is a schematic structural diagram of a magnetic body according to an embodiment of this application;

FIG. 17 is a schematic structural diagram of a housing 303 according to an embodiment of this application;

FIG. 18 is a schematic diagram of a winding manner of a first coil 3012 according to an embodiment of this application;

FIG. 19 is a schematic diagram of a winding manner of a second coil 3022 according to an embodiment of this application;

FIG. 20 is a schematic diagram of states of different magnetic poles generated by a magnetic body according to an embodiment of this application;

FIG. 21 is a schematic diagram of a first waveform of sine wave driving according to an embodiment of this application;

FIG. 22 is a schematic diagram of a second waveform of sine wave driving according to an embodiment of this application;

FIG. 23 is a schematic diagram of a waveform of square wave driving according to an embodiment of this application;

FIG. 24 is a flowchart of a pressing feedback method according to an embodiment of this application; and

FIG. 25 is a structural block diagram of an electronic device according to an embodiment of this application.

**DESCRIPTION OF EMBODIMENTS**

Technical solutions in embodiments of this application are clearly described below with reference to accompanying drawings in embodiments of this application. Apparently, the described embodiments are some rather than all of embodiments of this application. Another embodiment obtained by a person skilled in the art based on embodiments of this application without creative efforts shall fall within the protection scope of this application.

In embodiments of this application, terms "first" and "second" are used merely for the purpose of description, and shall not be construed as indicating or implying relative importance or implying a quantity of indicated technical features. Therefore, a feature defined by "first" or "second" can explicitly or implicitly includes one or more features. In the description of this application, unless otherwise stated, "a plurality of" means two or more than two.

In addition, in this application, orientation terms such as "upper" and "lower" are defined relative to orientations for schematic placement of components in the accompanying drawings. It should be understood that these directional terms are relative concepts, which are used for description and clarification relative to each other, and may change accordingly depending on changes in the orientations where the components are placed in the accompanying drawings.

Technical terms mentioned in embodiments of this application are explained below for understanding by a person skilled in the art.

A metal dome switch (Metal Dome Switch), which is also referred to as a Dome switch, is a piece of PET sheet including a metal dome (metal dome switch). The metal dome switch has good conduction performance, and can have good switch activation and control functions between an operator and a product. For example, the metal dome switch may be used as a switch on a circuit board such as a printed circuit board (Printed Circuit Board, PCB) or a flexible printed circuit (Flexible Printed Circuit, FPC). After a force is exerted on the metal dome switch, the metal dome switch deforms and is short-circuited to a PCB below the metal dome switch, causing signal communication. In this way, an important touch switch may be implemented between a user and an instrument. The metal dome switch further has a stable rebound force (automatic resetting after being pressed), and can bring a comfortable touch feeling to an operator.

A magnetic body refers to a substance or a material that can generate a magnetic field or can receive a magnetic force in a magnetic field. The magnetic body not only can attract some substance, but also can repel some substance. The magnetic body may include a permanent magnet, an electromagnet, an iron, or the like.

The permanent magnet is a magnet that can maintain magnetism for a long period of time. After being magnetized by a magnetic field, even under an action of a relatively large opposite magnetic field, the permanent magnet can still maintain magnetism of a part or most of original magnetic directions.

The electromagnet is an apparatus that is powered to generate electromagnetism. A conductive winding matching power of an iron core is wrapped around an outside of the iron core. Such a coil through which current pass has the magnetism like the magnet, and is referred to as an electromagnet (electromagnet). After the coil is powered on, a magnetic field is generated around the coil, and the iron core is magnetized in the magnetic field to generate the magnetism. Two electromagnets having a same magnetism repel each other, and two electromagnets having different magnetism attract each other. A magnitude of the magnetism may be controlled by a strength of the current or a number of turns of the coil.

A pressure transducer (Pressure Transducer) is a device or an apparatus that detects a change of a force through deformation displacement of a sensor, and can convert, based on a rule, a degree of deformation displacement due to the force into a usable outputted electrical signal. The change of the force is represented through the electrical signal.

The electronic device in embodiments of this application includes, but is not limited to, a mobile phone, a notebook computer, a tablet computer, a laptop computer, a personal digital assistant, a wearable device, or the like. Description is provided below by using an example in which the electronic device is the mobile phone.

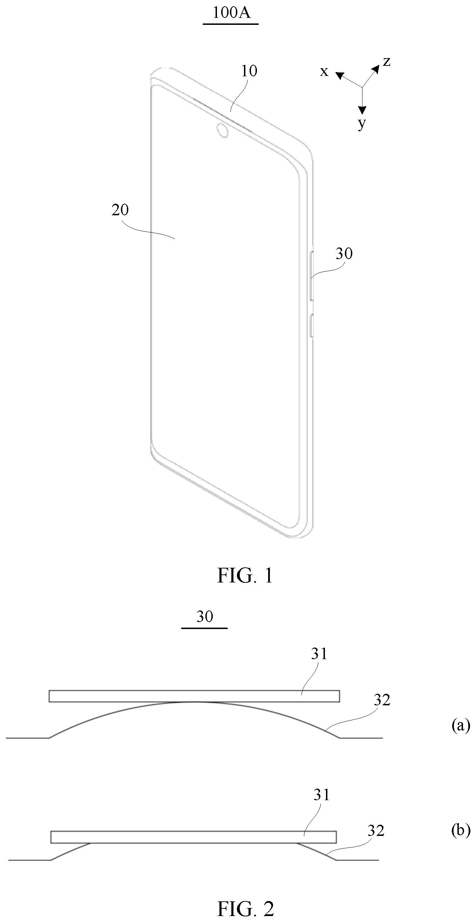

FIG. 1 is a schematic structural diagram of an electronic device 100A according to an embodiment of this application.

As shown in FIG. 1, the electronic device 100A may include a middle frame 10, a display screen 20, and a rear housing (not shown in the figure). The display screen 20, the middle frame 10, and the rear housing are successively snap-fitted together. The electronic device 100A further includes devices such as a circuit board, a battery, a speaker component, and a camera component, which are not enumerated herein.

To help a user to control the electronic device 100A, a mechanical button 30 is provided in the electronic device 100A. For example, the mechanical button 30 may be located on a side frame of the middle frame 10. The mechanical button 30 may be a volume button, a power button, or the like.

For ease of description of positions of the components in the electronic device 100A, in this embodiment of this application, a three-dimensional coordinate system is illustratively established based on the electronic device 100A. A direction of an x axis is a width direction of the electronic device 100A, a direction of a y axis is a length direction of the electronic device 100A, and a direction of a z axis is a thickness direction of the electronic device 100A.

FIG. 2 is a schematic diagram of different pressing states of a mechanical button 30.

As shown in (a) of FIG. 2, the mechanical button 30 includes a button cap 31 and a metal dome switch 32. After a finger presses the button cap 31, mechanical deformation/displacement is generated on the button cap 31, the button cap 31 applies pressure to the metal dome switch 32, and the metal dome switch 32 is deformed. The deformed metal dome switch 32 is connected to a PCB (not shown in the figure) below the deformed metal dome switch. After an electrical signal is triggered to a system, an operation of pressing a button is detected. The mechanical button 30 may achieve a pressing and rebound effect through the metal dome switch 32, to provide tactile feedback for the user.

If a force with which the user presses the button cap 31 is small, mechanical deformation/displacement of the button cap 31 is small, so that the metal dome switch 32 may not be deformed or may be deformed slightly. In this way, not only does the metal dome switch 32 provide no tactile feedback or little tactile feedback, but also a button operation may not be detected.

As shown in (b) of FIG. 2, if the user presses the button cap 31 with a large force, mechanical deformation/displacement of the button cap 31 is large, so that the metal dome switch 32 is greatly deformed. In this way, the metal dome switch 32 is easily crushed, causing a problem of slow rebound, and the tactile feedback cannot be provided in a timely manner.

It can be seen that under different pressing forces, an existing mechanical button 30 easily has a problem that the tactile feedback cannot be provided in a timely manner, resulting in relatively poor user experience.

To resolve the foregoing problem, embodiments of this application provide a pressing feedback apparatus 40 and method, and an electronic device 100A.

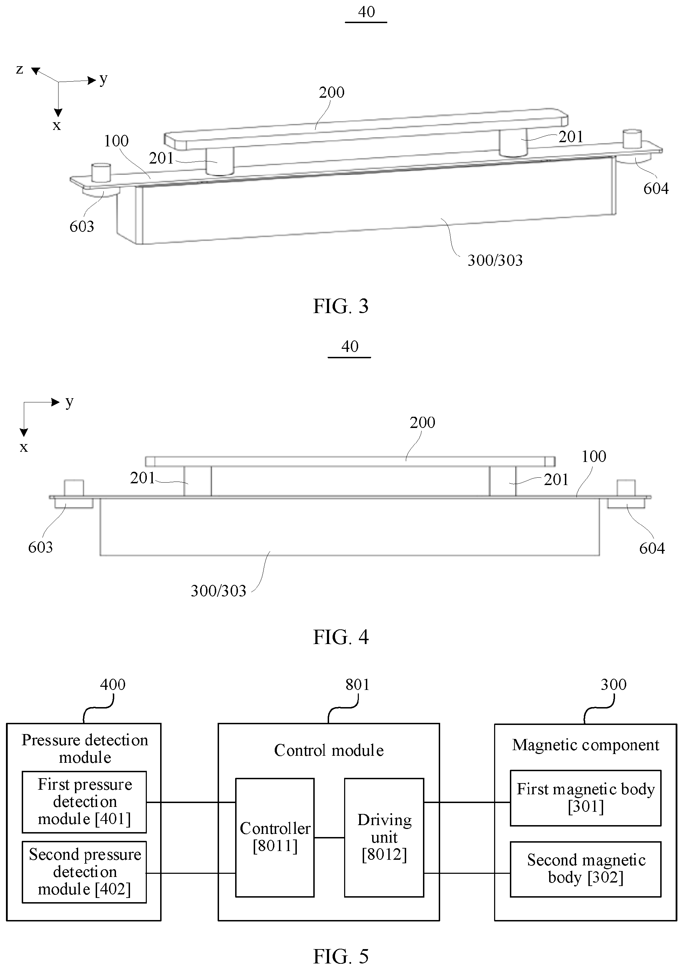

FIG. 3 is a first schematic structural diagram of a pressing feedback apparatus 40 according to an embodiment of this application. FIG. 4 is a first side view of a pressing feedback apparatus 40 according to an embodiment of this application.

As shown in FIG. 3 and FIG. 4, in some embodiments, a first pressing feedback apparatus 40 may include a support member 100, a pressing member 200, and a magnetic component 300.

The pressing member 200 is arranged on one side of the support member 100, and the magnetic component 300 is arranged on an other side of the support member 100.

For ease of describing a structure of the pressing feedback apparatus 40, a first direction is defined as a direction from the pressing member 200 to the magnetic component 300. In other words, the first direction is a direction in which the pressing member 200 is pressed. A second direction is defined as a direction from the magnetic component 300 to the pressing member 200. In other words, the second direction is an opposite direction of the first direction. A third direction is defined as a length direction of the support member 100, the first direction is parallel to the second direction, and the third direction is perpendicular to the first direction and the second direction. For example, in the electronic device 100A, the first direction and the second direction are parallel to an x-axis direction, and the third direction is parallel to a y-axis direction.

The pressing member 200 may include two guide posts 201. The two guide posts 201 are respectively arranged on two ends of the pressing member 200 along the third direction. The pressing member 200 is fixed to the support member 100 through the two guide posts 201. For example, the two guide posts 201 are symmetrically arranged on two ends of the pressing member 200 along the third direction. respectively. The two guide posts 201 may be configured to evenly transmit a pressing force to the support member 100.

When the finger presses the pressing member 200, the generated pressure is transmitted to the support member 100 through two guide posts 201 fixed between the pressing member 200 and the support member 100, so that the support member 100 is deformed in the first direction.

The guide post 201 may enable the pressing member 200 and the support member 100 to have a spacing along the first direction. In this way, the pressing member 200 can better apply pressure to the support member 100 through the spacing, so that the support member 100 is deformed better.

The pressing member 200 and the support member 100 may be fixed through a screw or an adhesive. For example, the support member 100 may be connected to the two guide posts 201 through the screw or the adhesive.

The magnetic component 300 may include a housing 303. The housing 303 is fixedly connected to the support member 100. For example, the housing 303 may be fixed to the support member 100 through the adhesive, or may be fixed through an auxiliary member. The auxiliary member may be a fixing member 305 below.

FIG. 5 is a structural block diagram of a pressing feedback apparatus 40 according to an embodiment of this application.

As shown in FIG. 5, in some embodiments, the pressing feedback apparatus 40 may further include a pressure detection module 400 and a control module 801.

The magnetic component 300 may further include a first magnetic body 301 and a second magnetic body 302. The control module 801 is electrically connected to the pressure detection module 400, and is electrically connected to at least one of the first magnetic body 301 or the second magnetic body 302.

The second magnetic body 302 and the first magnetic body 301 may use any one of a permanent magnet, an electromagnet, or an iron. For example, the first magnetic body 301 and the second magnetic body 302 may both use the electromagnet, or the first magnetic body 301 use the electromagnet and the second magnetic body 302 use the permanent magnet, or vice versa. Alternatively, the first magnetic body 301 use the electromagnet, and the second magnetic body 302 use the iron, or vice versa. A material selection criterion of the first magnetic body 301 and the second magnetic body 302 is as long as an acting force generated between the two can be changed.

For example, if one of the first magnetic body 301 and the second magnetic body 302 uses the electromagnet and the other uses the permanent magnet, the control module 801 is electrically connected to the magnetic body using the electromagnet and is not electrically connected to the magnetic body using the permanent magnet. If both the first magnetic body 301 and the second magnetic body 302 use the electromagnet, the control module 801 is electrically connected to the first magnetic body 301 and the second magnetic body 302.

The pressure detection module 400 is configured to generate an electrical signal corresponding to the deformation of the support member 100, and send the corresponding electrical signal to the control module 801. The pressure detection module 400 may be adjacent to a joint between the support member 100 and the pressing member 200, so that the pressure detection module 400 can accurately detect force-bearing deformation of the support member 100.

The control module 801 is configured to: determine a value of a pressure applied to the pressing member 200 based on the electrical signal, and adjust a drive current of the first magnetic body 301 and the second magnetic body 302 based on the pressure value, so that an acting force is generated between the first magnetic body 301 and the second magnetic body 302. The acting force acts on the support member 100, to drive the support member 100 to generate a position change, and to generate different acting forces for a hand of a user, to provide a corresponding pressing feedback effect for the user.

A parameter of the acting force includes a magnitude and a direction. The position change generated by the support member 100 includes a recess deformation generated in a middle portion of the support member 100 along a direction in which the support member 100 is pressed and a protrusion deformation generated in the middle portion of the support member 100 along an opposite direction in which the support member 100 is pressed. The middle portion of the support member 100 is a portion of the support member 100 corresponding to the first magnetic body 301 and the second magnetic body 302.

In some embodiments, the control module 801 may include a controller (Microcontroller Unit, MCU) 8011 and a driving unit 8012. The controller 8011 is electrically connected to the pressure detection module 400. The controller 8011 is further electrically connected to the driving unit 8012. The driving unit 8012 is electrically connected to signal terminals of the first magnetic body 301 and the second magnetic body 302.

The controller 8011 is configured to determine a value of a pressure applied to the pressing member 200 based on the electrical signal sent by the pressure detection module 400, and determine a drive current based on the pressure value. The controller 8011 sends the drive current to the driving unit 8012. The driving unit 8012 separately inputs the drive current to the first magnetic body 301 and the second magnetic body 302, so that the first magnetic body 301 and the second magnetic body 302 generate acting forces of different magnitudes and directions. The acting force may drive the support member 100 to generate a position change, and may generate different acting forces for a hand of a user, thereby providing corresponding pressing feedback when the pressing member 200 is pressed or when the pressing member 200 is pressed and then is lifted.

In some embodiments, a plurality of pressure detection modules 400 may be arranged. When two pressure detection modules 400 are arranged, the pressure detection module 400 may include a first pressure detection module 401 and a second pressure detection module 402. The first pressure detection module 401 is configured to correspondingly generate an electrical signal when the support member 100 is deformed due to a pressure. The second pressure detection module 402 is configured to correspondingly generate an electrical signal when the support member 100 is deformed due to a pressure.

The first pressure detection module 401 sends a generated electrical signal to the control module 801 and the second pressure detection module 402 sends a generated electrical signal to the control module, respectively. The control module 801 correspondingly determines two groups of pressure values based on two groups of electrical signals, and adds the two groups of pressure values to serve as a total pressure value. The control module 801 determines a drive current based on the total pressure value. In this way, electrical signals generated by the pressure detection modules 400 at different positions can accurately represent pressures of the pressing member 200, so that the control module 801 can accurately input the drive current to the first magnetic body 301 and the second magnetic body 302, and the first magnetic body 301 and the second magnetic body 302 can accurately attract or repel each other, and generate acting forces of different magnitudes and directions. The acting force may drive the support member 100 to generate a corresponding position change, and may generate different acting forces for a hand of the user, thereby providing the corresponding pressing feedback when the pressing member 200 is pressed or when the pressing member 200 is pressed and lifted. The acting force may include an attractive force and a repulsive force.

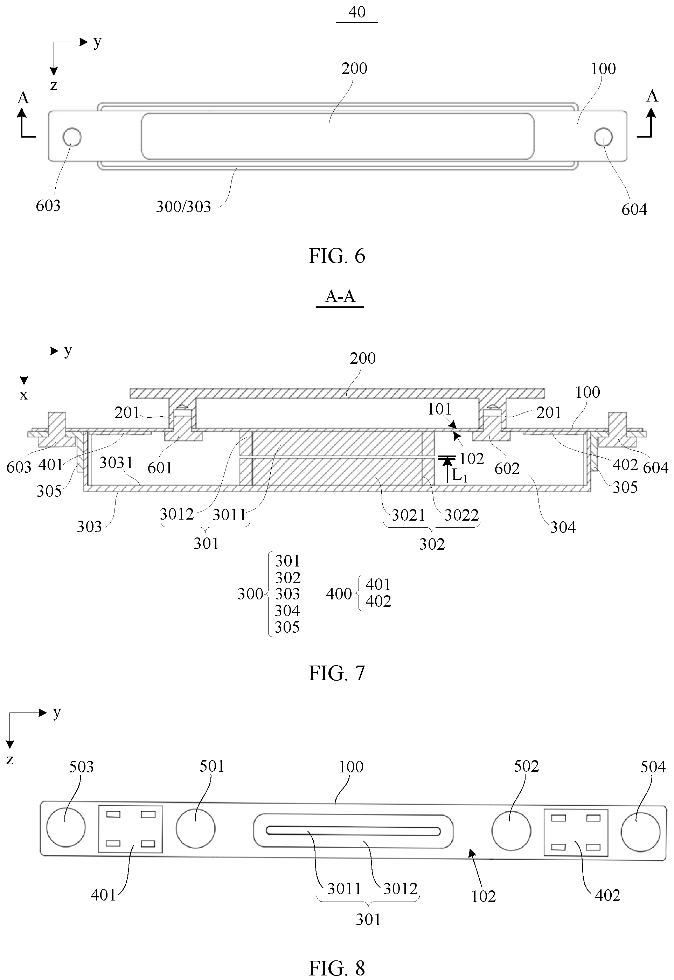

FIG. 6 is a first top view of a pressing feedback apparatus 40 according to an embodiment of this application.

As shown in FIG. 6, in some embodiments, two ends of a support member 100 in a third direction are configured to be in a fixed state. For example, the two ends of the support member 100 may be fixed to a middle frame 10 of an electronic device 100A.

The support member 100 may be made of a steel sheet material. The support member 100 has a relatively thin thickness. In this way, it can be ensured that when the support member 100 has a specific strength, the support member can be deformed/displaced when subjected to a pressure.

In some embodiments, the support member 100 may use a complete plate-shaped structure.

FIG. 7 is a schematic structural diagram of a section A-A in FIG. 6.

As shown in FIG. 7, in some embodiments, a support member 100 may include a first surface 101 and a second surface 102. The first surface 101 faces away from the second surface 102. The first surface 101 faces an outside of the electronic device 100A, and the second surface 102 faces an inside of the electronic device 100A.

The pressing member 200 is connected between two ends of the support member 100, and two guide posts 201 are fixed to the first surface 101 of the support member 100, so that the pressing member 200 is fixed to the first surface 101 of the support member 100 through the two guide posts 201.

The pressing member 200 is configured to bear external pressing, to deform the support member 100. The finger of the user presses the pressing member 200, and a pressing force generated by pressing is transmitted to the support member 100 through the guide post 201, so that the support member 100 displaces or deforms in a first direction.

The pressing member 200 may be fixed at a middle position of the support member 100 along a third direction. In this way, the pressing member 200 can improve uniformities of transmitting the pressing force to the support member 100.

The first magnetic body 301 is arranged on the support member 100, and the second magnetic body 302 may be fixed to the housing 303. For example, the first magnetic body 301 may be fixed to the first surface 101 or the second surface 102, and the second magnetic body 302 may be fixed to the inside or the outside of the housing 303.

In some embodiments, the first magnetic body 301 is arranged on a side of the support member 100 that faces away from the pressing member 200, the second magnetic body 302 is arranged on a side of the first magnetic body 301 that faces away from the support member 100, and the second magnetic body 302 is arranged opposite to the first magnetic body 301, and is fixedly arranged.

The housing 303 of the magnetic component 300 may include a housing bottom surface 3031. The housing bottom surface 3031 is opposite to the second surface 102. The housing 303 is fixed to the second surface 102 of the support member 100. The housing 303 and the second surface 102 define a cavity 304. The first magnetic body 301 and the second magnetic body 302 are located in the cavity 304. For example, the first magnetic body 301 is arranged on the second surface 102, the second magnetic body 302 is arranged on the housing bottom surface 3031, and the second magnetic body 302 is fixed through the housing 303.

The first magnetic body 301 is exactly opposite to the second magnetic body 302 along the first direction. A projection of the first magnetic body 301 along the first direction overlaps a projection of the second magnetic body 302 along the first direction, so that the first magnetic body 301 and the second magnetic body 302 has a relatively large area, and a larger acting force is generated between the first magnetic body 301 and the second magnetic body 302. In this way, when the first magnetic body 301 and the second magnetic body 302 perform an attraction action, an optimal attractive force can be generated. When a repulsion action is performed, an optimal repulsive force can be generated.

When the pressing member 200 is not pressed and the support member 100 is not deformed, is a gap Li is defined between the first magnetic body 301 and the second magnetic body 302. In this way, the first magnetic body 301 and the second magnetic body 302 can be facilitated to perform the attraction action when the current signal is received.

The first magnetic body 301 and the second magnetic body 302 may be located between two guide posts 201, which is equivalent to that the first magnetic body 301 and the second magnetic body 302 are located at a middle position of the pressing feedback apparatus 40. The middle position is usually a position pressed by a user. In this way, a feedback effect can be better provided to the user through the first magnetic body 301 and the second magnetic body 302, thereby avoiding a situation in which a pressing position is displaced from a feedback position.

The pressure detection module 400 is arranged on the support member 100, and the pressure detection module 400 may be fixed to the first surface 101 or the second surface 102. For example, the pressure detection module 400 may use a pressure transducer.

In some embodiments, the pressure detection module 400 may be located in the cavity 304, and is fixed to the second surface 102 of the support member 100. The pressure detection module 400 is adjacent to the guide post 201 and is away from the first magnetic body 301, so that when the pressure subjected to the pressing member 200 is transmitted to the support member 100 through the guide post 201 and deformation is generated, the pressure detection module 400 can accurately sense the deformation and generate the electrical signal.

The pressure detection module 400 may include a first pressure detection module 401 and a second pressure detection module 402. The first pressure detection module 401 and the second pressure detection module 402 are located in the cavity 304. The first pressure detection module 401 and the second pressure detection module 402 are respectively located on two ends in a length direction of the support member 100. The "two ends" herein refer to two sides of a center in the length direction of the support member 100, and do not refer to ends in the length direction of the support member 100.

For example, along the third direction, the first pressure detection module 401 is located on a side of a left guide post 201 from the first magnetic body 301. The first pressure detection module 401 is configured to correspondingly generate the electrical signal when the support member 100 is deformed by the pressure transmitted by the left guide post 201. Along the third direction, the second pressure detection module 402 is located on a side of a right guide post 201 away from the first magnetic body 301. The second pressure detection module 402 is configured to correspondingly generate the electrical signal when the support member 100 is deformed by the pressure transmitted by the right guide post 201.

It should be noted that "left" and "right" herein are determined based on the state shown in FIG. 7, are merely for ease of describing a position relationship and a connection relationship of each component, and do not limit a specific structure of the guide post 201. The same applies below.

In some embodiments, the magnetic component 300 may further include two fixing members 305. The two fixing members 305 are respectively arranged at two sides of the housing 303 along the length direction of the support member 100, and the housing 303 is fixed to the two ends of the support member 100 through the two fixing members 305.

The fixing member 305 continuously extends from a side of the housing 303 to the second surface 102 of the support member 100, and extends toward an end of the support member 100 along the second surface 102. In this way, the housing 303 may be fixed to the support member 100 through the fixing member 305.

For example, the fixing member 305 may be fixed to the support member 100 through the screw or the adhesive. The fixing member 305 may be fixed to the housing 303 through the screw or the adhesive.

FIG. 8 is a first schematic structural diagram of a support member 100 according to an embodiment of this application. FIG. 8 shows a structure of a second surface 102 of the support member 100.

As shown in FIG. 8, in some embodiments, the support member 100 may include a first through hole 501, a second through hole 502, a third through hole 503, and a fourth through hole 504.

The first through hole 501 and the second through hole 502 are located at two sides of the first magnetic body 301 along a third direction. The first through hole 501 and the second through hole 502 are configured to fix a pressing member 200. Positions of the first through hole 501 and the second through hole 502 correspond to positions of two guide posts 201.

The third through hole 503 and the fourth through hole 504 are located on two ends of the support member 100 along the third direction. The first through hole 501 and the second through hole 502 are located between the third through hole 503 and the fourth through hole 504. The third through hole 503 and the fourth through hole 504 are configured to fix the support member 100, a fixing member 305, and a middle frame 10.

For example, the first pressure detection module 401 may be located between the first through hole 501 and the third through hole 503, and the second pressure detection module 402 may be located between the second through hole 502 and the fourth through hole 504.

With reference to FIG. 7, when the support member 100 is fixed to the pressing member 200 through screws, and the fixing member 305, the support member 100, and the middle frame 10 are fixed through the screws, the screws may include a first screw 601, a second screw 602, a third screw 603, and a fourth screw 604.

For example, the first screw 601 passes through the first through hole 501 and is configured to fix the guide post 201 and the support member 100 on the left side. The second screw 602 passes through the second through hole 502 and is configured to fix the guide post 201 and the support member 100 on a right side. In this way, the support member 100 may be fixed to the guide post 201, and the support member 100 may further be fixed to the pressing member 200.

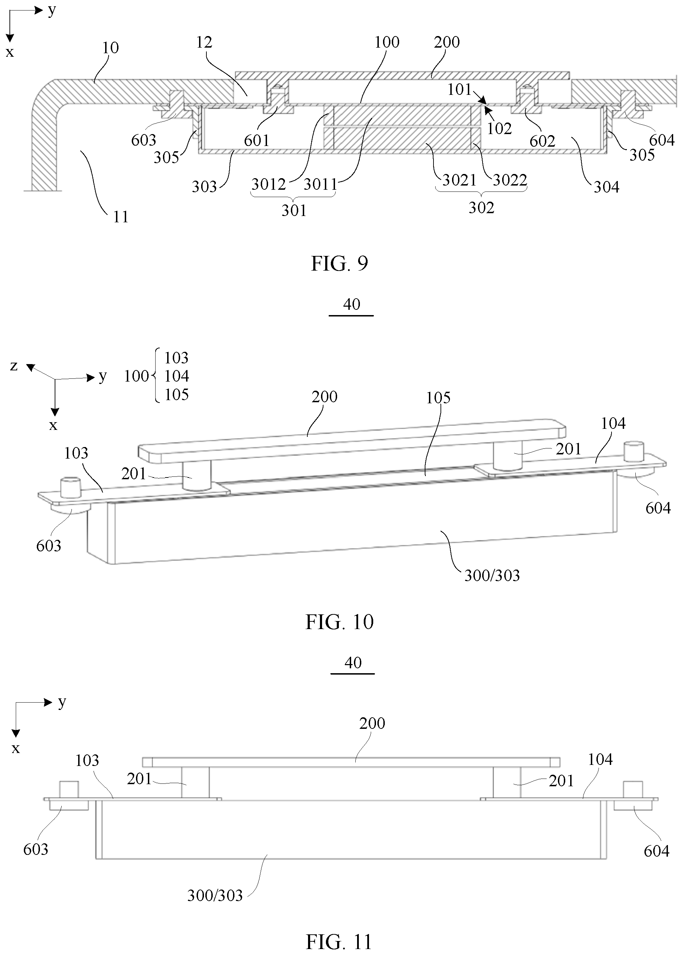

FIG. 9 is a first schematic structural diagram of a pressing feedback apparatus 40 and a middle frame 10 according to an embodiment of this application.

As shown in FIG. 9, in some embodiments, a middle frame 10 defines an accommodating cavity 11, the middle frame 10 is provided with an assembly hole 12, and the assembly hole 12 is in communication with the accommodating cavity 11. The pressing feedback apparatus 40 is located in the accommodating cavity 11, and the pressing member 200 passes through the assembly hole 12. A first surface 101 of the support member 100 is adhered to an inner surface (not shown in the figure) of the middle frame 10. Two ends of the support member 100 are fixed to a periphery of the assembly hole 12.

Gaps exist between two ends of the pressing member 200 and an edge of the assembly hole 12, to avoid that the middle frame 10 at the edge of the assembly hole 12 hinders movement of the pressing member 200 when the pressing member 200 is pressed. The pressing member 200 protrudes from the middle frame 10, to help a user press the pressing member 200.

With reference to FIG. 7, FIG. 8, and FIG. 9, in some embodiments, the pressing feedback apparatus 40 is fixed to the middle frame 10 through a third screw 603 and a fourth screw 604. The third screw 603 passes through the third through hole 503, and jointly passes through a part of the left fixing member 305 extending to the support member 100, the left end of the support member 100, and the middle frame 10 on the left side of the assembly hole 12. The third screw 603 is screwed into the middle frame 10 on the left side of the assembly hole 12. Similarly, the fourth screw 604 passes through the fourth through hole 504, and jointly passes through a part of the right fixing member 305 extending to the support member 100, the right end of the support member 100, and the middle frame 10 on the right side of the assembly hole 12. The fourth screw 604 is screwed into the middle frame 10 on the right side of the assembly hole 12. In this way, the fixing member 305, the housing 303, the support member 100, and the middle frame 10 can be fixed, thereby improving stability.

FIG. 10 is a second schematic structural diagram of a pressing feedback apparatus 40 according to an embodiment of this application.

As shown in FIG. 10, in some embodiments, a difference between a second pressing feedback apparatus 40 and the first pressing feedback apparatus 40 provided in the foregoing embodiment lies in that the support member 100 may have a segmented structure. For the remaining structure, reference may be made to the first pressing feedback apparatus 40. Details are not described herein again.

The support member 100 may include a first cantilever beam 103, a second cantilever beam 104, and a support 105. The support 105 is located between the first cantilever beam 103 and the second cantilever beam 104. The first cantilever beam 103, the support 105, and the second cantilever beam 104 are sequentially connected along a third direction.

For example, the support 105 may be connected to the first cantilever beam 103 and the second cantilever beam 104 through an adhesive or a screw.

FIG. 11 is a second side view of a pressing feedback apparatus 40 according to an embodiment of this application.

As shown in FIG. 11, in some embodiments, a third screw 603 passes through one end of a first cantilever beam 103 away from a pressing member 200, and is configured to fix the first cantilever beam 103 to a middle frame 10. A fourth screw 604 passes through one end of the second cantilever beam 104 away from the pressing member 200, and is configured to fix the second cantilever beam 104 to the middle frame 10.

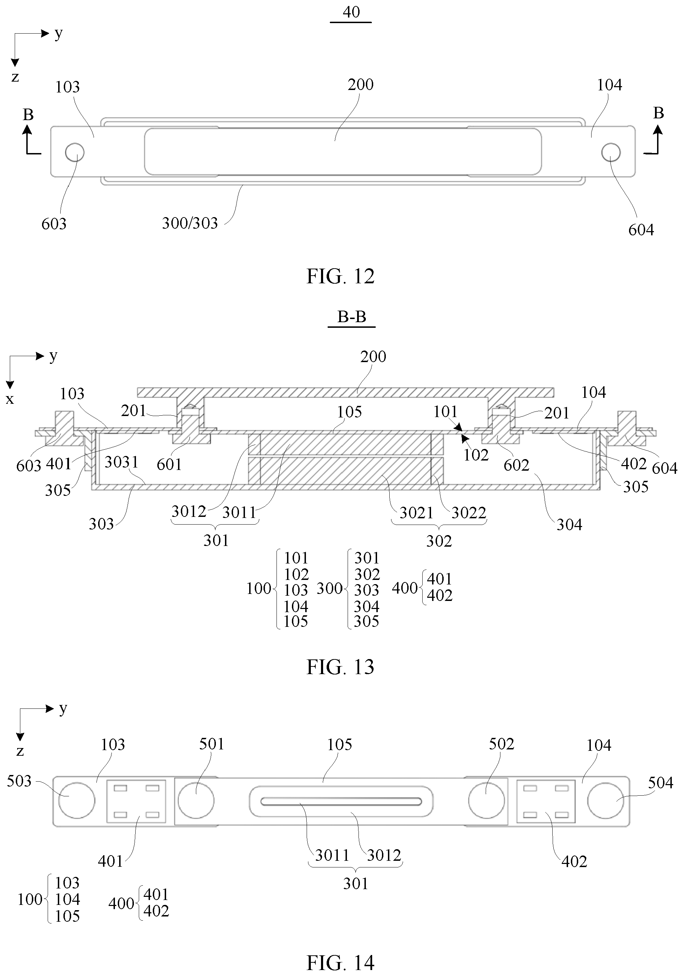

FIG. 12 is a second top view of a pressing feedback apparatus 40 according to an embodiment of this application.

As shown in FIG. 12, in some embodiments, a third through hole 503 may be arranged at one end of a first cantilever beam 103 away from a pressing member 200. The third through hole 503 is configured for a third screw 603 to pass through. A fourth through hole 504 may be arranged at an end of a second cantilever beam 104 away from the pressing member 200. The fourth through hole 504 is configured for a fourth screw 604 to pass through.

FIG. 13 is a schematic structural diagram of a section B-B in FIG. 12.

As shown in FIG. 13, in some embodiments, a support 105 is located on a same side relative to a first cantilever beam 103 and a second cantilever beam 104. For example, the support 105 is located on a side of the first cantilever beam 103 and the second cantilever beam 104 away from a pressing member 200. In this way, the support member 100 may be deformed when the support member is subjected to pressure from the pressing member 200.

The first cantilever beam 103 is connected to the second cantilever beam 104 through the support 105. A length direction of the first cantilever beam 103, the second cantilever beam 104, and the support 105 are all parallel to a third direction. The first surface 101 of the support member 100 may include the first cantilever beam 103, the second cantilever beam 104, and a surface of the support 105 that is adjacent to the pressing member 200. A second surface 102 of the support member 100 may include the first cantilever beam 103, the second cantilever beam 104, and a surface of the support 105 that faces away from the pressing member 200.

The support 105 is located at a middle position of the support member 100. The first magnetic body 301 is fixed to the support 105, and is opposite to the second magnetic body 302 that is fixed at a middle position of a housing bottom surface 3031 of the housing 303. In this way, a feedback effect can be better provided to the user through the first magnetic body 301 and the second magnetic body 302, thereby avoiding a situation in which a pressing position is displaced from a feedback position.

The housing 303 of the magnetic component 300 is fixed to the first cantilever beam 103 and the second cantilever beam 104. For example, two ends of the housing 303 are respectively fixed to the first cantilever beam 103 and the second cantilever beam 104. The housing 303, the first cantilever beam 103, the second cantilever beam 104, and the support 105 define a cavity 304. A manner of fixing the housing 303 to the first cantilever beam 103 and the second cantilever beam 104 may include an adhesive, soldering, or connection through an auxiliary member (such as a fixing member 305).

When one pressure detection module 400 is arranged, the pressure detection module 400 may be located on one of the first cantilever beam 103, the second cantilever beam 104, and the support 105. When a plurality of pressure detection modules 400 are arranged, the pressure detection module 400 may be located on at least one of the first cantilever beam 103, the second cantilever beam 104, or the support 105. For example, when the pressure detection module 400 includes a first pressure detection module 401 and a second pressure detection module 402, the first pressure detection module 401 may be fixed to the first cantilever beam 103, and the second pressure detection module 402 may be fixed to the second cantilever beam 104, or vice versa.

In some embodiments, one end of the housing 303 is connected to the first cantilever beam 103 through one fixing member 305. The fixing member 305 continuously extends from a side of the housing 303 to the second surface 102 of the first cantilever beam 103, and extends towards an end of the first cantilever beam 103 along the second surface 102. An other end of the housing 303 is connected to the second cantilever beam 104 through another fixing member 305. The fixing member 305 continuously extends from a side of the housing 303 to the second surface 102 of the second cantilever beam 104, and extends toward an end of the second cantilever beam 104 along the second surface 102.

FIG. 14 is a second schematic structural diagram of a support member 100 according to an embodiment of this application.

As shown in FIG. 13 and FIG. 14, in some embodiments, when a screw fixation manner is used, one end of the first cantilever beam 103 overlaps one end of the support 105, and the first through hole 501 is provided in an overlapping region. A left guide post 201 is located at a joint between the first cantilever beam 103 and the support 105, and a first screw 601 passes through the first through hole 501 and the left side guide post 201, to implement a fixed connection between the first cantilever beam 103, the support 105, and the left guide post 201.

Similarly, one end of the second cantilever beam 104 overlaps an other end of the support 105, and a second through hole 502 is provided in an overlapping region. A right guide post 201 is located at a joint between the second cantilever beam 104 and the support 105, and a second screw 602 passes through the second through hole 502 and a right guide post 201, to implement a fixed connection between the second cantilever beam 104, the support 105, and the right guide post 201.

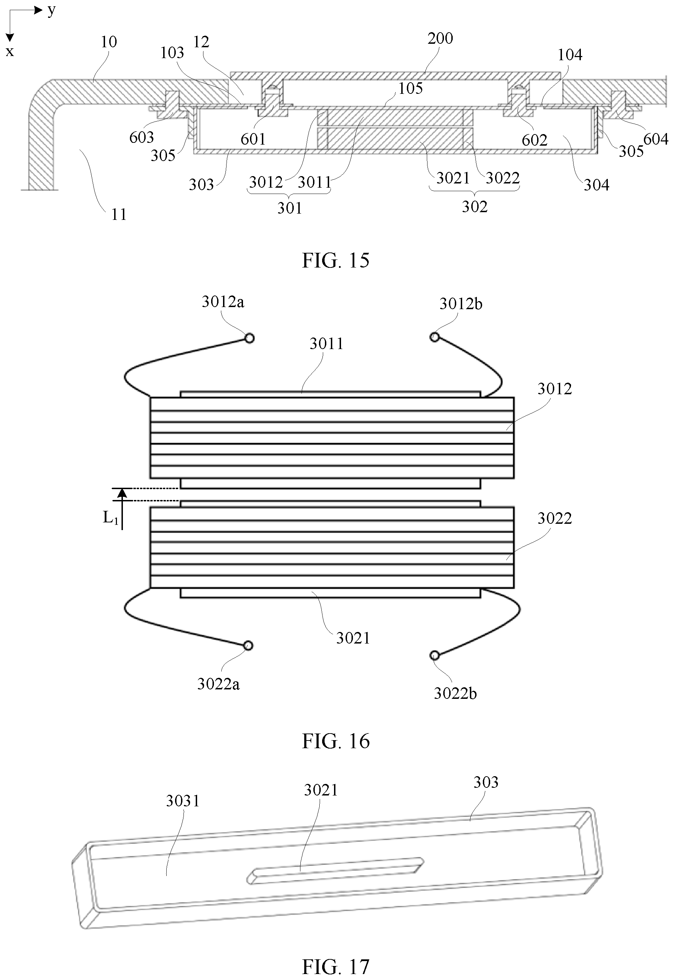

FIG. 15 is a second schematic structural diagram of a pressing feedback apparatus 40 and a middle frame 10 according to an embodiment of this application.

With reference to FIG. 13, FIG. 14, and FIG. 15, in some embodiments, a third screw 603 passes through the third through hole 503, and jointly passes through one end of the first cantilever beam 103, a part of the first cantilever beam 103 extended by the fixing member 305, and the middle frame 10 on the left side of the assembly hole 12. The third screw 603 is screwed into the middle frame 10 on the left side of the assembly hole 12. Similarly, the fourth screw 604 passes through the fourth through hole 504, and jointly passes through one end of the second cantilever beam 104, extends to a part of the second cantilever beam 104 extended by another fixing member 305, and the middle frame 10 on the right side of the assembly hole 12. The fourth screw 604 is screwed into the middle frame 10 on the right side of the assembly hole 12. In this way, stability of the fixing member 305, the housing 303, the first cantilever beam 103, the second cantilever beam 104, and the middle frame can be improved.

In the pressing feedback apparatus 40, a user presses the pressing member 200, and the generated pressure is transmitted to regions corresponding to a first screw 601 and a second screw 602 through guide posts 201 at two ends of the pressing member 200. The support member 100 is deformed by the pressure transmitted by the two guide posts 201. The first pressure detection module 401 is adjacent to the first screw 601. The first pressure detection module 401 may generate a first electrical signal corresponding to the deformation, and transmit the first electrical signal to the control module 801. The second pressure detection module 402 is adjacent to the second screw 602. The second pressure detection module 402 may generate a second electrical signal corresponding to the deformation, and transmit the second electrical signal to the control module 801. For a driving process of the control module 801, reference may be made to content of subsequent embodiments. Details are not described herein again.

The support member 100 in the pressing feedback apparatus 40 provided in this embodiment of this application has a segmented structure. Compared with the first pressing feedback apparatus 40, the support member 100 of the segmented structure is more easily deformed when the support member is subjected to the pressure. When sensing the deformation generated by the support member 100, the pressure detection module 400 generates a corresponding electrical signal more accurately. The pressure detection module 400 sends the electrical signal to the control module 801. The control module 801 determines a pressure value more accurately, so as to adjust a drive current of the first magnetic body 301 and/or the second magnetic body 302 more accurately based on a change of the pressure value. Therefore, an acting force is generated between the first magnetic body 301 and the second magnetic body 302. The acting force acts on the support member 100, and may drive the support member 100 to change a position, to generate different acting forces on a hand of the user, thereby improving a corresponding pressing feedback effect provided to the user.

FIG. 16 is a schematic structural diagram of a magnetic body according to an embodiment of this application.

As shown in FIG. 7 and FIG. 16, in some embodiments, the first magnetic body 301 may include a first iron core 3011 and a first coil 3012. The first iron core 3011 is fixed on a second surface 102 of the support member 100, and the first coil 3012 is wound on the first iron core 3011.

FIG. 17 is a schematic structural diagram of a housing 303 according to an embodiment of this application.

As shown in FIG. 7, FIG. 16, and FIG. 17, in some embodiments, the second magnetic body 302 may include a second iron core 3021 and a second coil 3022. The second iron core 3021 is fixed to the housing bottom surface 3031 of the housing 303, and the second coil 3022 is wound on the second iron core 3021.

The first iron core 3011 is opposite to the second iron core 3021 along the first direction. When not powered on, the first iron core 3011 and the second iron core 3021 have a gap Li along the first direction.

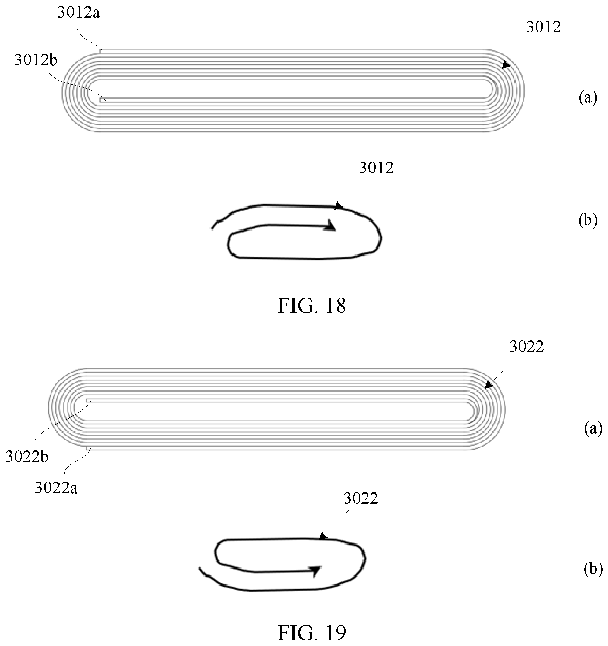

FIG. 18 is a schematic diagram of a winding manner of a first coil 3012 according to an embodiment of this application. FIG. 18 is a schematic diagram of FIG. 16 from a top view.

As shown in FIG. 16 and (a) and (b) of FIG. 18, in some embodiments, the first coil 3012 is wound on the first iron core 3011 from an outside to an inside in a clockwise direction. The first coil 3012 includes a first signal terminal 3012a and a second signal terminal 3012b. The first signal terminal 3012a is led out from an outer side of the first coil 3012. The second signal terminal 3012b is led out from an inner side of the first coil 3012.

FIG. 19 is a schematic diagram of a winding manner of a second coil 3022 according to an embodiment of this application. FIG. 19 is a schematic diagram of FIG. 16 from a top view.

As shown in FIG. 16 and (a) and (b) of FIG. 19, in some embodiments, the second coil 3022 is wound on the second iron core 3021 from the outside to the inside in a counterclockwise direction. The second coil 3022 includes a third signal terminal 3022a and a fourth signal terminal 3022b. The third signal terminal 3022a is led out from an outer side of the second coil 3022. The fourth signal terminal 3022b is led out from an inner side of the second coil 3022.

In this embodiment of this application, the two groups of coils have opposite winding directions. However, in another embodiment, the two groups of coils may also use a winding manner in a same direction. Details are not described herein again.

In some embodiments, the control module 801 inputs a drive current to the first coil 3012 and the second coil 3022 respectively, and may change magnetic poles of the first magnetic body 301 and the second magnetic body 302 based on different directions of the input current, so as to change that opposite ends of the first magnetic body 301 and the second magnetic body 302 have opposite magnetic poles or the same magnetic pole, thereby adjusting the first magnetic body 301 and the second magnetic body 302 to perform an attraction action or a repulsion action.

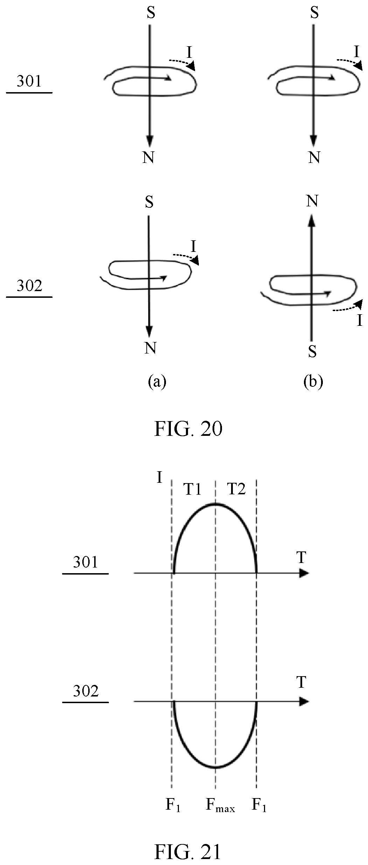

FIG. 20 is a schematic diagram of states of different magnetic poles generated by a magnetic body according to an embodiment of this application. A solid line arrow shown in FIG. 20 indicates a winding direction of a coil, and a dashed line arrow indicates a current direction of a drive current I.

As shown in FIG. 7, FIG. 16, and (a) of FIG. 20, in some embodiments, in a process in which a user presses and lifts a pressing member 200, the user applies different pressing forces to the pressing member 200, and the pressing forces are transmitted to a support member 100 and deform the support member 100. The pressure detection module 400 detects deformation of the support member 100 to generate an electrical signal, and sends the electrical signal to the control module 801. The control module 801 determines a pressure value of the pressing member 200 based on the electrical signal, and generates the drive current I based on the pressure value. The control module 801 outputs the drive current I to the first magnetic body 301 and the second magnetic body 302.

When it is adjusted that the opposite ends of the first magnetic body 301 and the second magnetic body 302 have opposite magnetic poles based on the drive current, for example, the control module 801 inputs the drive current I from the first signal terminal 3012a of the first coil 3012 and transmits the drive current I to the second signal terminal 3012b in the first magnetic body 301, and the control module 801 inputs the drive current I from the fourth signal terminal 3022b of the second coil 3022 and transmits the drive current I to the third signal terminal 3022a in the second magnetic body 302. In this way, based on a reverse winding manner of the first coil 3012 and the second coil 3022, a direction of the drive current I of the first magnetic body 301 is opposite to a direction of the drive current of the second magnetic body 302. An end of the first magnetic body 301 that is adjacent to the second magnetic body 302 generates an N pole, and an end of the second magnetic body 302 that is adjacent to the first magnetic body 301 generates an S pole. Opposite ends of the first magnetic body 301 and the second magnetic body 302 have opposite magnetic poles. The first magnetic body 301 and the second magnetic body 302 attract each other, so that an attractive force exists between the first iron core 3011 and the second iron core 3021. The attractive force is used to provide corresponding pressing feedback when the pressing member 200 is pressed.

As shown in FIG. 7, FIG. 16, and (b) of FIG. 20, in some embodiments, when opposite ends of the first magnetic body 301 and the second magnetic body 302 are adjusted have a same magnetic pole based on the drive current, the control module 801 inputs the drive current I from the first signal terminal 3012a of the first coil 3012 and transmits the drive current I to the second signal terminal 3012b in the first magnetic body 301, and the control module 801 inputs the drive current I from the third signal terminal 3022a of the second coil 3022 and transmits the drive current I to the fourth signal terminal 3022b in the second magnetic body 302. In this way, based on the reverse winding manner of the first coil 3012 and the second coil 3022, the direction of the drive current of the first magnetic body 301 is the same as the direction of the drive current I of the second magnetic body 302. An end of the first magnetic body 301 that is adjacent to the second magnetic body 302 generates an N pole, and an end of the second magnetic body 302 that is adjacent to the first magnetic body 301 generates an N pole. Opposite ends of the first magnetic body 301 and the second magnetic body 302 have the same magnetic pole. The first magnetic body 301 and the second magnetic body 302 repel each other, so that a repulsive force exists between the first iron core 3011 and the second iron core 3021. The repulsive force is used to provide corresponding pressing feedback when the pressing member 200 is pressed and lifted.

In this way, under different pressing forces, different corresponding drive current is inputted into the first magnetic body 301 and the second magnetic body 302, and the first magnetic body 301 and the second magnetic body 302 may generate attractive forces or repulsive forces of different strengths based on the current directions in the first magnetic body 301 and the second magnetic body 302, so that different corresponding pressing feedback is provided in a timely manner, achieving good user experience

In some embodiments, the control module 801 is configured to determine a pressure value of the pressing member 200 based on the electrical signal sent by the pressure detection module 400, and adjust the drive current based on the change of the pressure value.

The adjusting the drive current includes adjusting a magnitude of the drive current and adjusting a direction of the drive current. The magnitude of the acting force generated between the first magnetic body 301 and the second magnetic body 302 may be changed by adjusting the magnitude of the drive current inputted into the first magnetic body 301 and the second magnetic body 302. By adjusting the direction of the drive current inputted into the first magnetic body 301 and the second magnetic body 302, the magnetic poles of the first magnetic body 301 and the second magnetic body 302 may be changed, and the change of the magnetic poles may enable the first magnetic body 301 and the second magnetic body 302 to generate acting forces of different directions.

For example, if opposite ends of the first magnetic body 301 and the second magnetic body 302 have opposite magnetic poles, the attractive force is generated between the first magnetic body 301 and the second magnetic body 302. If opposite ends of the first magnetic body 301 and the second magnetic body 302 have the same magnetic pole, the repulsive force is generated between the first magnetic body 301 and the second magnetic body 302.

In some embodiments, the control module 801 determines the magnitude of the drive current I based on the pressure value according to the following formula:

$$F=B \times L \times I;$$

where F is a pressure value, B is a magnetic flux of a magnetic body, L is an induction of a magnetic body, and I is a magnitude of a drive current.

F is a detected variable, I is an unknown variable, and B and L are known fixed amounts. In this way, different magnitudes of drive current I may be determined based on different pressure values F. A magnitude of the voltage value is in direct proportion to a magnitude of the drive current.

The control module 801 inputs the drive current I into the first magnetic body 301 and the second magnetic body 302, and may change, based on a direction of a current in the first magnetic body 301 and the second magnetic body 302, that opposite ends of the first magnetic body 301 and the second magnetic body 302 have opposite magnetic poles or the same magnetic pole, to enable the first magnetic body 301 and the second magnetic body 302 to generate the attractive force or the repulsive force. The attraction action or the attraction action of the first magnetic body 301 and the second magnetic body 302 may provide corresponding pressing feedback when the pressing member 200 is pressed or when the pressing member 200 is pressed and lifted. The control module 801 may further control the magnitude of the pressure value F through the magnitude of the pressure at which the pressing member 200 is pressed, and further control the magnitude of the drive current through the magnitude of the pressure value F, so that the first magnetic body 301 and the second magnetic body 302 may generate attractive forces or repulsive forces of different strengths, to provide corresponding different degrees of pressing feedback when the pressing member 200 is pressed or when the pressing member 200 is pressed and lifted.

Under the drive of different drive current, the first magnetic body 301 and the second magnetic body 302 generate different interacting forces. Different acting forces act on the support member 100, to drive the position of the support member 100 to change. For example, if the attractive force is generated between the first magnetic body 301 and the second magnetic body

302, the first magnetic body and the second magnetic body may drive the support member 100 to generate a position change along the first direction, and transmit the position change to the pressing member 200 to be fed back to a finger of the user, so as to provide corresponding pressing feedback to the user when the pressing member 200 is pressed. If the repulsive force is generated between the first magnetic body 301 and the second magnetic body 302, the first magnetic body and the second magnetic body may drive the support member 100 to generate a position change along the second direction, and transmit the position change to the pressing member 200 to be fed back to a finger of the user, so as to provide corresponding pressing feedback to the user when the pressing member 200 is pressed and lifted.

For example, a larger pressure exerted on the pressing member 200 indicates a larger electrical signal generated by the pressure detection module 400, a larger pressure value determined by the control module, a larger drive current, a larger acting force generated between the first magnetic body 301 and the second magnetic body 302, and a larger pressing feedback force felt by the user. Otherwise, a smaller pressure exerted on the pressing member 200 indicates a smaller electrical signal generated by the pressure detection module 400, a smaller pressure value determined by the control module, a smaller drive current, a smaller acting force generated between the first magnetic body 301 and the second magnetic body 302, and a smaller pressing feedback force sensed by the user.

The pressing feedback apparatus 40 provided in embodiments of this application may simulate a mechanical button, and implement pressing feedback. After the user presses and/or lifts the pressing member 200, the operation performed by the user on the pressing member causes the support member 100 to deform, and the pressure detection module 400 detects the deformation and generates a corresponding electrical signal that is sent to the control module. The control module adjusts the drive current of the first magnetic body 301 and the second magnetic body 302 based on the electrical signal, to adjust the acting force generated between the first magnetic body 301 and the second magnetic body 302. Different acting forces act on the support member 100, which may drive the support member 100 to generate a corresponding position change, and may generate different acting forces on a hand of the user, to provide, in a timely manner, different pressing feedback corresponding to the pressing member 200 being subjected to different pressures. In this way, under different pressing forces, the pressing feedback apparatus 40 can provide tactile feedback in a timely manner, achieving good user experience.

In some embodiments, the control module may directly output a drive signal to the first magnetic body 301 and the second magnetic body 302 by using a current source such as a drive current. In addition, the control module may further output a drive signal to the first magnetic body 301 and the second magnetic body 302 by using a voltage source such as a drive voltage. A voltage of the voltage source is determined based on the drive current and a resistance of the coil of the magnetic body, and then the drive voltage is outputted to the first magnetic body 301 and the second magnetic body 302. In this embodiment of this application, for the process in which the control module drives the first magnetic body 301 and the second magnetic body 302 by using the drive voltage, reference may be made to the process in which the first magnetic body 301 and the second magnetic body 302 are driven by using the drive current. Details are not described herein again.

In some embodiments, when the user presses the pressing member 200, a pressing force applied to the pressing member 200 gradually increases. When the user presses and lifts the pressing member 200, the pressing force applied to the pressing member 200 gradually decreases. In this way, the control module 801 may determine, based on a change of the pressure value, whether the pressing member 200 is in a phase of being pressed or a phase of being lifted after being pressed.

In different force-bearing phases of the pressing member 200, the control module 801 is configured to adjust the magnitude of the drive current of the first magnetic body 301 and/or the second magnetic body 302 based on the change of the pressure value, to adjust the magnitude of the acting force generated between the first magnetic body 301 and the second magnetic body 302, so that different degrees of position change of the support member 100 is generated; and/or the control module 801 is configured to adjust a direction of a drive current of the first magnetic body 301 and/or the second magnetic body 302 based on a change of the pressure value, and change magnetic poles of opposite ends of the first magnetic body and the second magnetic body, to adjust the direction of the acting force, so that the support member 100 generates position changes in different directions.

In some embodiments, the control module 801 is configured to increase the drive current of the first magnetic body 301 and/or the second magnetic body 302 in response to an increase in the pressure value, so that the acting force generated between the first magnetic body 301 and the second magnetic body 302 is increased, to increase the position change of the support member 100 along a same direction.

For example, in response to the increase in the pressure value, the control module 801 indicates that the current phase is a phase in which the pressing member 200 is pressed. The control module 801 increases the drive current inputted to the first magnetic body 301 and/or the second magnetic body 302, and directions of the current in the first magnetic body 301 and the second magnetic body 302 are opposite, so that opposite ends of the first magnetic body 301 and the second magnetic body 302 have opposite magnetic poles, and opposite ends of the first magnetic body 301 and the second magnetic body 302 attract each other and generate the attractive force. Because the second magnetic body 302 is in a fixed state, and the first magnetic body 301 and the second magnetic body 302 attract each other, so that the first magnetic body 301 moves in a direction toward the second magnetic body 302. In this way, a direction of the attractive force is the same as a direction in which the pressing member 200 is pressed (the first direction), to drive the support member 100 to generate a recess deformation along the first direction. Then, as the drive current gradually increases, the attractive force gradually increases, to increase a degree of the recess deformation of the support member 100 along the first direction. The recess deformation is generated on the support member 100, and the pressing member 200 may be driven to move along the first direction. Movement of the pressing member 200 along the first direction may exert traction on the finger of the user, so that the finger of the user moves along the first direction. In this way, a scenario in which the mechanical button is pressed is simulated through the attraction action of the first magnetic body 301 and the second magnetic body 302, so that the corresponding pressing feedback when the pressing member 200 is pressed can be provided.

In some embodiments, the control module 801 is configured to reduce the drive current of the first magnetic body 301 and/or the second magnetic body 302 in response to a decrease of the pressure value, so that the acting force generated between the first magnetic body 301 and the second magnetic body 302 is decreased, to reduce a position change of the support member 100 along the same direction, and/or change a direction of the drive current of the first magnetic body 301 and/or the second magnetic body 302, to change a direction of the acting force, to cause a position change of the support member 100 in an opposite direction.

In an implementation, the control module 801 reduces in response to the pressure value reaching a maximum value, indicating that the current phase is a phase in which the pressing member 200 is pressed and lifted. The control module 801 decreases the drive current inputted into the first magnetic body 301 and/or the second magnetic body 302, and the attractive force between the first magnetic body 301 and the second magnetic body 302 gradually decreases, to decrease the degree of the recess deformation of the support member 100 along the first direction, so as to provide the corresponding pressing feedback when the pressing member 200 is pressed and lifted. In this way, a scenario in which the mechanical button is lifted after being pressed may be simulated through the action corresponding to a decrease of the attractive force between the first magnetic body 301 and the second magnetic body 302, and the corresponding pressing feedback when the pressing member 200 is pressed and then is lifted may further be provided.

In another implementation, in response to the pressure value reaching the maximum value and decreasing, the control module 801 changes a current direction of the drive current outputted to the first magnetic body 301 and the second magnetic body 302, so that the drive current of the first magnetic body 301 and the second magnetic body 302 have a same current direction, and opposite ends of the first magnetic body 301 and the second magnetic body 302 have the same magnetic pole. Opposite ends of the first magnetic body 301 and the second magnetic body 302 repel each other, and the repulsive force is generated. A direction of the repulsive force is opposite to a direction in which the pressing member 200 is pressed. In other words, the direction of the repulsive force is the second direction, to drive the support member 100 to generate the protrusion deformation along the second direction along the second direction. Then, as the drive current gradually reduces, the repulsive force gradually reduces, to decrease the degree of a protrusion deformation that is generated by the support member 100 along the second direction. The protrusion deformation of the support member 100 may drive the pressing member 200 to move in the second direction. Movement of the pressing member 200 in the second direction may apply pressure to the finger of the user, so that the finger of the user is lifted by the pressing member 200 to move in the second direction. In this way, a scenario in which the mechanical button is lifted after being pressed is simulated through the repulsion action of the first magnetic body 301 and the second magnetic body 302, so that the corresponding pressing feedback when the pressing member 200 is lifted after being pressed can be provided.

In some embodiments, a driving manner in which the control module 801 outputs the drive current may include sine wave driving, square wave driving, and the like.

In the following, both the first magnetic body 301 and the second magnetic body 302 use the electromagnet to illustrate the process that the control module 801 outputs the corresponding drive current to the first magnetic body 301 and the second magnetic body 302 as the control module 801 changes with the pressure value, to drive the first magnetic body 301 and the second magnetic body 302 to generate the acting force to provide the corresponding pressing feedback.

In some embodiments, the control module 801 may output the drive current to the first magnetic body 301 and the second magnetic body 302 in a sine wave driving manner. As the pressure value increases or decreases, the control module 801 controls the amplitude and/or the phase of the sine wave waveform, to change the magnitude and/or the direction of the drive current in real time, so as to change the magnitude and/or the direction of the acting force generated between the first magnetic body 301 and the second magnetic body 302 in real time, thereby providing the corresponding pressing feedback in a timely manner.

In an implementation, the control module 801 drives, through a half-cycle sine wave driving manner based on the drive current, the first magnetic body 301 and the second magnetic body 302 to perform an action of attraction or repulsion, to simulate a feedback process of pressing and lifting the pressing member 200. The control module 801 is configured to perform step S401 to step S404 below.

Step S401: The control module 801 outputs the drive current to the first magnetic body 301 and/or the second magnetic body 302 in response to the pressure value being greater than a first pressure threshold, so that an attractive force is generated between the first magnetic body 301 and the second magnetic body 302, and the attractive force enables the first magnetic body 301 to move toward the second magnetic body 302.

Step S402: The control module 801 increases the drive current of the first magnetic body 301 and/or the second magnetic body 302 in response to the pressure value being greater than the first pressure threshold and increasing, so that the attractive force generated between the first magnetic body 301 and the second magnetic body 302 is increased.

Step S403: The control module 801 reduces, in response to the pressure value reaching a maximum value and starting to decrease, the drive current of the first magnetic body 301 and the second magnetic body 302, so that the attractive force generated between the first magnetic body 301 and the second magnetic body 302 is reduced.

Step S404: The control module 801 stops outputting the drive current to the first magnetic body 301 and the second magnetic body 302 in response to the pressure value decreasing to the first pressure threshold, so that the acting force between the first magnetic body 301 and the second magnetic body 302 is zero.

It should be noted that the decrease/increase in this embodiment of this application includes a gradual decrease/increase and a jump decrease/increase.

FIG. 21 is a schematic diagram of a first waveform of sine wave driving according to an embodiment of this application. In FIG. 21, a horizontal coordinate is a time T, and a vertical coordinate is a magnitude of a drive current I.

As shown in FIG. 21, in some embodiments, an example in which a decrease/increase is a gradual decrease/increase is used.

In a phase T1 of a half-cycle sine wave driving: Step S401: A first pressure threshold $F_1$ may be zero or another value. An example in which the first pressure threshold $F_1$ is zero is used. A user starts to press a pressing member 200, and a value of a pressure applied to the pressing member 200 is greater than zero. A control module 801 generates, in response to the pressure value being greater than zero, a corresponding drive current based on a current pressure value. The control module 801 outputs a drive current to a first magnetic body 301 and a second magnetic body 302, and causes directions of the drive current in the first magnetic body

301 and the second magnetic body 302 to be opposite, so that the first magnetic body 301 and the second magnetic body 302 both generate magnetism. Opposite ends of the first magnetic body 301 and the second magnetic body 302 have opposite magnetic poles, and the opposite ends of the first magnetic body 301 and the second magnetic body 302 attract each other and generate a mutual attractive force. A magnitude of the attractive force is positively correlated to a magnitude of the magnetism, and a magnitude of the magnetism is positively correlated to a magnitude of the drive current. A direction of the attractive force is the same as a direction in which the pressing member 200 is pressed, so that the first magnetic body 301 may move toward the second magnetic body 302 based on an action of the attractive force. The first magnetic body 301 moves along a direction in which the pressing member 200 is pressed, and may drive the support member 100 to generate a recess deformation along the direction in which the pressing member 200 is pressed, to generate an acting force on a hand of a user.

Step S402: The user continues to press the pressing member 200, and the pressing force applied to the pressing member 200 gradually increases. The control module 801 generates, in response to the pressure value being greater than zero and gradually increasing, a gradually increasing drive current based on the gradually increasing pressure value. Both the first magnetic body 301 and the second magnetic body 302 gradually increase with a gradual increase in the drive current, and the magnetism gradually increases in a reverse electromagnetic field, so that the mutual attractive force generated between the first magnetic body 301 and the second magnetic body 302 gradually increases. A degree of movement of the first magnetic body 301 toward the second magnetic body 302 is gradually increased based on an effect of the gradually increasing attractive force. A movement degree of the first magnetic body 301 along the direction in which the pressing member 200 is pressed increases, and may drive the support member 100 to generate gradually increasing recess deformation along the direction in which the pressing member 200 is pressed.

At the end of the moment T1, the value of the pressure applied to the pressing member 200 reaches a maximum value $F_{max}$. The drive current outputted by the control module 801 is maximized, the magnetism generated by the first magnetic body 301 and the second magnetic body 302 is maximized, the mutual attractive force generated between the first magnetic body 301 and the second magnetic body 302 is maximized, and the degree of recess deformation generated by the support member 100 along the direction in which the pressing member 200 is pressed is maximized.

In a phase T2 of a half-cycle sine wave driving: Step S403: After the user presses the pressing member 200 with the maximum pressure and then starts to lift the pressing member, the pressure applied to the pressing member 200 starts to decrease from the maximum value. In response to the pressure value reaching the maximum value $F_{max}$ and starting to decrease, the control module 801 generates a gradually decreasing drive current based on a gradually decreasing pressure value. As the drive current decreases from a highest point, the magnetism of the first magnetic body 301 and the second magnetic body 302 gradually decreases, so that the mutual attractive force generated between the first magnetic body 301 and the second magnetic body 302 gradually decreases. A degree of movement of the first magnetic body 301 toward the second magnetic body 302 is gradually decreased based on an effect of the gradually decreasing attractive force. The movement degree of the first magnetic body 301 along the direction in which the pressing member 200 is pressed decreases, which may drive a recess deformation degree of the support member 100 along the direction in which the pressing member 200 is pressed to gradually decrease.

Step S404: After the user is separated from the pressing member 200, the pressing force applied to the pressing member 200 is decreased to zero. In response to the pressure value being equal to zero, the drive current generated by the control module 801 is zero. When the half-cycle sine wave ends, the control module 801 stops outputting the drive current to the first magnetic body 301 and the second magnetic body 302, both the first magnetic body 301 and the second magnetic body 302 do not generate the magnetism, so that the first magnetic body 301 and the second magnetic body 302 stop generating the attractive force, and the mutual acting force generated between the first magnetic body 301 and the second magnetic body 302 is zero. No attractive force or no repulsive force exists between the first magnetic body 301 and the second magnetic body 302, and the support member 100 restores to an initial position, and the recess deformation is no longer generated. The initial position refers to a state in which the support member 100 is not subjected to a pressure.

In this embodiment of this application, the control module 801 may change the acting force between the first magnetic body 301 and the second magnetic body 302 in real time based on a change of the pressure value, and drive the support member 100 to generate different degrees of recess deformation through different acting forces. The recess deformation of the support member 100 drives a position change of the pressing member 200, and the pressing member 200 having different position changes is fed back to the finger of the user, so that the acting force felt by the finger of the user is correspondingly changed, to provide different pressing feedback effects to the user in real time.

In some embodiments, the control module 801 may output the corresponding drive current when the change of the pressure value satisfies a condition. In other words, the drive current is not outputted in a real-time gradual change manner, but is outputted in a jump manner.

For example, when the decrease/increase is the jump decrease/increase, in the phase T1 of the half-cycle sine wave driving, the control module 801 generates a corresponding drive current based on the current maximum pressure value $F_{max}$ in responds to that the pressure value reaches the maximum value $F_{max}$. The control module 801 outputs the drive current to the first magnetic body 301 and the second magnetic body 302, so that opposite ends of the first magnetic body 301 and the second magnetic body 302 attract each other and generate the mutual attractive force, to drive the support member 100 to generate the recess deformation along the direction in which the pressing member 200 is pressed. In a phase T2 of the half-cycle sine wave driving: the control module 801 stops outputting the drive current to the first magnetic body 301 and the second magnetic body 302 in response to the pressure value decreasing to zero, so that the acting force generated between the first magnetic body 301 and the second magnetic body 302 is zero. The support member 100 restores to the initial position, and the recess deformation is no longer generated. It should be noted that for specific content that the control module 801 adjusts, based on the change of the pressure value, the acting forces having different magnitudes and/or directions generated between the first magnetic body 301 and the second magnetic body 302, reference may be correspondingly made to corresponding content provided in step S401 to step S404 in the foregoing embodiment. Details are not described herein again.

In this way, the control module 801 may output the drive current in a jump manner. The magnitude of the drive current does not change in real time with a real-time change of the pressure value, and the magnitude of the drive current changes only when the pressure value reaches a specific condition. The control module 801 controls the first magnetic body 301 and the second magnetic body 302 to perform corresponding actions when the pressure value reaches a maximum value, to provide a pressing feedback effect at a time, and controls the first magnetic body 301 and the second magnetic body 302 to perform corresponding actions when the pressure value decreases to a specific threshold, to provide a pressing feedback effect again.

In another implementation, the control module 801 drives, in a positive cycle sine wave driving manner based on the drive current, the first magnetic body 301 and the second magnetic body 302 to perform an action of attraction or repulsion, to simulate a feedback process of pressing the pressing member 200 and then lifting the pressing member. The control module 801 is configured to perform step S501 to step S506 below.

Step S501: The control module 801 outputs the drive current to the first magnetic body 301 and/or the second magnetic body 302 in response to the pressure value being greater than a second pressure threshold, so that an attractive force is generated between the first magnetic body 301 and the second magnetic body 302,

to enable the first magnetic body 301 to move toward the second magnetic body 302.

Step S502: The control module 801 increases the drive current of the first magnetic body 301 and the second magnetic body 302 in response to the pressure value being greater than the second pressure threshold and increasing, so that the attractive force is increased.

Step S503: The control module 801 reduces, in response to the pressure value reaching a maximum value and starting to decrease, the drive current of one of the first magnetic body 301 and the second magnetic body 302 to a first current threshold, and maintains the drive current of the other unchanged, so that the attractive force is reduced.

Step S504: The control module 801 reversely increases the drive current of one of the first magnetic body 301 and the second magnetic body 302 in response to the pressure value decreasing to a third pressure threshold, and maintains the drive current of the other unchanged, so that a repulsive force is generated between the first magnetic body 301 and the second magnetic body 302, and the repulsive force is increased, to enable the first magnetic body 301 to move away from the second magnetic body 302.

Step S505: The control module 801 reduces the drive current of the first magnetic body 301 and the second magnetic body 302 in response to the pressure value continuing to decrease to a fourth pressure threshold, so that the repulsive force is reduced.

Step S506: The control module 801 stops outputting the drive current to the first magnetic body 301 and the second magnetic body 302 in response to the pressure value decreasing to the second pressure threshold, so that the acting force between the first magnetic body 301 and the second magnetic body 302 is zero.

It should be noted that the decrease/increase in this embodiment of this application includes a gradual decrease/increase and a jump decrease/increase.

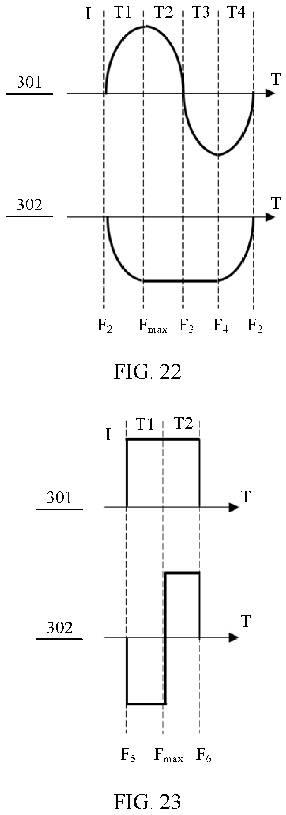

FIG. 22 is a schematic diagram of a second waveform of sine wave driving according to an embodiment of this application. In FIG. 22, a horizontal coordinate is a time T, and a vertical coordinate is a magnitude of a drive current I.

As shown in FIG. 22, in some embodiments, an example in which a decrease/increase is a gradual decrease/increase is used.

In a phase T1 of a full-cycle sine wave driving: Step S501: A second pressure threshold $F_2$ may be zero or another value. An example in which the second pressure threshold $F_2$ that is zero is used. The user starts to press the pressing member 200, and a pressure applied to the pressing member 200 is greater than zero. A control module 801 generates, in response to the pressure value being greater than zero, a corresponding drive current based on a current pressure value. The control module 801 outputs the drive current to a first magnetic body 301 and a second magnetic body 302, so that the first magnetic body 301 and the second magnetic body 302 both generate magnetism. Opposite ends of the first magnetic body 301 and the second magnetic body 302 have opposite magnetic poles, and the opposite ends of the first magnetic body 301 and the second magnetic body 302 attract each other and generate a mutual attractive force. A direction of the attractive force is the same as a direction in which the pressing member 200 is pressed, so that the first magnetic body 301 may move toward the second magnetic body 302 based on an action of the attractive force. The first magnetic body 301 moves along a direction in which the pressing member 200 is pressed, and may drive the support member 100 to generate a recess deformation along the direction in which the pressing member 200 is pressed.

Step S502: The user continues to press the pressing member 200, and the pressing force applied to the pressing member 200 gradually increases. The control module 801 generates, in response to the pressure value being greater than zero and gradually increasing, a gradually increasing drive current based on the gradually increasing pressure value. Both the first magnetic body 301 and the second magnetic body 302 gradually increase with a gradual increase in the drive current, and magnetism gradually increases in a reverse electromagnetic field, so that the mutual attractive force generated between the first magnetic body 301 and the second magnetic body 302 gradually increases. A degree of movement of the first magnetic body 301 toward the second magnetic body 302 is gradually increased based on an effect of the gradually increasing attractive force. A movement degree of the first magnetic body 301 along the direction in which the pressing member 200 is pressed increases, and may drive the support member 100 to generate progressively increasing recess deformation along the direction in which the pressing member 200 is pressed.

At the end of the moment T 1, the pressure value $F_{max}$ applied to the pressing member 200 is maximized. The drive current outputted by the control module 801 is maximized, the magnetism generated by the first magnetic body 301 and the second magnetic body 302 is maximized, the mutual attractive force generated between the first magnetic body 301 and the second magnetic body 302 is maximized, and the degree of recess deformation generated by the support member 100 along the direction in which the pressing member 200 is pressed is maximized.

In a phase T2 of a full-cycle sine wave driving: Step S503: The first current threshold may be zero or another value. An example in which the first current threshold is zero is used. After the user presses the pressing member 200 with the maximum pressure and then starts to lift the pressing member, the pressure applied to the pressing member 200 starts to decrease from the maximum value. In response to the pressure value reaching the maximum value $F_{max}$ and starting to decrease, the control module 801 generates a gradually decreasing drive current based on a gradually decreasing pressure value. The control module 801 decreases the drive current outputted to the first magnetic body 301, and keeps outputting a peak current of the phase T1 to the second magnetic body 302. If the first magnetic body 301 decreases to zero as the drive current decreases, the magnetism generated by the first magnetic body 301 decreases to zero. The second magnetic body 302 maintains the magnetism generated unchanged. Therefore, at the end of the moment T2, the attractive force generated between the first magnetic body 301 and the second magnetic body 302 is the attractive force of the second magnetic body 302 for the first magnetic body 301. The attractive force is less than the attractive force generated when the first magnetic body 301 and the second magnetic body 302 both have magnetism and attract each other in the phase T1. In the phase T2, the attractive force generated between the first magnetic body 301 and the second magnetic body 302 gradually decreases, and a degree of movement of the first magnetic body 301 toward the second magnetic body 302 is gradually decreased based on an effect of the gradually decreasing attractive force. The movement degree of the first magnetic body 301 along the direction in which the pressing member 200 is pressed decreases, which may decrease the recess deformation of the support member 100 along the direction in which the pressing member 200 is pressed.

In a phase T3 of a full-cycle sine wave driving: Step S504: A third pressure threshold $F_3$ is not zero, and is greater than the second pressure threshold $F_2$. The user presses and starts to lift the pressing member 200, and then continues to lift the pressing member. The pressing force applied to the pressing member 200 continues to decrease. In response to the pressure value being decreased to the third pressure threshold $F_3$, the control module 801 reversely increases the drive current of the first magnetic body 301, and keeps outputting the peak current of the phase T1 to the second magnetic body 302. A direction of the drive current in the first magnetic body 301 is the same as a direction of the drive current in the second magnetic body 302, so that the first magnetic body 301 and the second magnetic body 302 generate magnetism. Opposite ends of the first magnetic body 301 and the second magnetic body 302 have the same magnetic pole, and opposite ends of the first magnetic body 301 and the second magnetic body 302 repel each other and generate the repulsive force. A direction of the repulsive force is opposite to a direction in which the pressing member 200 is pressed. Based on the action of the repulsive force, the first magnetic body 301 moves in a direction away from the second magnetic body 302, to drive the support member 100 to generate a protrusion deformation along the second direction. In response to the pressure value reaching the third pressure threshold $F_3$ and continuing to decrease, the control module 801 gradually reversely increases the drive current of the first magnetic body 301, and keeps outputting the peak current of the phase T1 to the second magnetic body 302, so that the magnetism generated by the first magnetic body 301 increases, the magnetism generated by the second magnetic body 302 remains unchanged, and the repulsive force generated between the first magnetic body 301 and the second magnetic body 302 gradually increases. A direction of the repulsive force is opposite to a direction in which the pressing member 200 is pressed. Based on an action of the gradually increasing repulsive force, a degree of movement of the first magnetic body 301 toward a direction away from the second magnetic body 302 is gradually increased, which may drive the support member 100 to generate the gradually increasing protrusion deformation along the second direction. In this way, by an end moment of the phase T3, the repulsive force generated between the first magnetic body 301 and the second magnetic body 302 is maximized, and the protrusion deformation generated by the support member 100 along the second direction is maximized, where the second direction is opposite to the direction in which the pressing member 200 is pressed.

In a phase T4 of a full-cycle sine wave driving: Step S505: A fourth pressure threshold $F_4$ is not zero, and the third pressure threshold $F_3$ is greater than the fourth pressure threshold $F_4$. The user presses and starts to lift the pressing member 200, and then continues to lift the pressing member again, and a pressing force applied to the pressing member 200 continues to decrease again. In response to the pressure value continuing to decrease to the fourth pressure threshold $F_4$, the control module 801 gradually decreases the drive current of the first magnetic body 301 and the second magnetic body 302, so that the magnetism generated by the first magnetic body 301 and the second magnetic body 302 in a same magnetic field gradually decreases, and the repulsive force generated between the first magnetic body 301 and the second magnetic body 302 gradually decreases. Based on an action of the gradually decreasing repulsive force, a degree to which the first magnetic body 301 moves in a direction away from the second magnetic body 302 is gradually decreased, so that the degree of the protrusion deformation of the support member 100 along the second direction can be decreased.

Step S506: The pressing force applied to the pressing member 200 is decreased to zero after the user is separated from the pressing member 200. In response to the pressure value being decreased to zero, the drive current generated by the control module 801 is zero. The control module 801 stops outputting the drive current to the first magnetic body 301 and the second magnetic body 302, both the first magnetic body 301 and the second magnetic body 302 do not generate the magnetism, so that the first magnetic body 301 and the second magnetic body 302 stop generating the repulsive force, and the mutual acting force generated between the first magnetic body 301 and the second magnetic body 302 is zero. In this way, at the end of a moment T4, no repulsive force and no attractive force exist between the first magnetic body 301 and the second magnetic body 302, and the support member 100 restores to the initial position, and no position change occurs any longer.

In this embodiment of this application, the control module 801 divides, into a plurality of phases, a process of changing the pressure value generated when the pressing member 200 is pressed and lifted, so that the control module can adjust the magnitude and the direction of the acting force between the first magnetic body 301 and the second magnetic body 302 more accurately based on the change of the pressure value, to drive the support member 100 to generate different degrees of recess deformation or protrusion deformation. The recess deformation or the protrusion deformation generated by the support member 100 drives the pressing member 200 to generate the position change, and the pressing member 200 with different position changes is fed back to the finger of the user, so that the acting force felt by the finger of the user correspondingly changes, to provide corresponding different pressing feedback to the user in a process of pressing and then lifting the pressing member 200 at a time in a more timely manner and accurately.

In some embodiments, the control module 801 may output the corresponding drive current when the change of the pressure value satisfies a condition. In other words, the drive current is not outputted in a real-time gradual change manner, but is outputted in a jump manner.

For example, when the decrease/increase is the jump decrease/increase, in the phase T1 of the half-cycle sine wave driving, the control module 801 generates a corresponding drive current based on the current maximum pressure value $F_{max}$ in responds to that the pressure value reaches the maximum value $F_{max}$. The control module 801 outputs the drive current to the first magnetic body 301 and the second magnetic body 302, so that opposite ends of the first magnetic body 301 and the second magnetic body 302 attract each other and generate the mutual attractive force, to drive the support member 100 to generate the recess deformation along the direction in which the pressing member 200 is pressed. In the phase T2 of the half-cycle sine wave driving: the control module 801 generates a corresponding drive current based on the pressure value corresponding to the third pressure threshold $F_3$ in response to the pressure value decreasing to the third pressure threshold $F_3$. The control module 801 outputs the drive current to the first magnetic body 301 and the second magnetic body 302, so that opposite ends of the first magnetic body 301 and the second magnetic body 302 repel each other, and the repulsive force is generated, to drive the support member 100 to perform the protrusion deformation along the second direction. In the phase T3 of the half-cycle sine wave driving: the control module 801 generates a corresponding drive current based a pressure value corresponding to a fourth pressure threshold $F_4$ in response to the pressure value decreasing to the fourth pressure threshold $F_4$. The control module 801 outputs the drive current to the first magnetic body 301 and the second magnetic body 302, to decrease the repulsive force generated between the first magnetic body 301 and the second magnetic body 302, so as to decrease the degree of protrusion deformation generated by the support member 100 along the second direction. In a phase T4 of the half-cycle sine wave driving: the control module 801 stops outputting the drive current to the first magnetic body 301 and the second magnetic body 302 in response to the pressure value decreasing to zero, so that the acting force generated between the first magnetic body 301 and the second magnetic body 302 is zero. The support member 100 restores to the initial position, and the recess deformation is no longer generated. It should be noted that for specific content that the control module 801 adjusts, based on the change of the pressure value, the acting forces having different magnitudes and/or directions generated between the first magnetic body 301 and the second magnetic body 302, reference may be correspondingly made to corresponding content provided in step S501 to step S506 in the foregoing embodiment. Details are not described herein again.

In this way, the control module 801 may output the drive current in a jump manner. The magnitude of the drive current does not change in real time with a real-time change of the pressure value, and the magnitude of the drive current changes only when the pressure value reaches a specific condition. The control module 801 controls the first magnetic body 301 and the second magnetic body 302 to perform corresponding actions when the pressure value reaches a maximum value, to provide a pressing feedback effect at a time, and controls the first magnetic body 301 and the second magnetic body 302 to perform corresponding actions when the pressure value decreases to different pressure thresholds, to provide a corresponding pressing feedback effect again.

In some embodiments, the control module 801 may output the drive current to the first magnetic body 301 and the second magnetic body 302 in a square wave driving manner. As the pressure value increases or decreases to a corresponding threshold, the control module 801 controls high and low amplitudes of the square wave waveform to change the magnitude and/or the direction of the drive current in a timely manner, so as to change the magnitude and/or the direction of the acting force generated between the first magnetic body 301 and the second magnetic body 302 in a timely manner, thereby providing the corresponding pressing feedback in a timely manner.

In some embodiments, the control module 801 drives, through the square wave driving manner based on the drive current, the first magnetic body 301 and the second magnetic body 302 to perform an action of attraction or repulsion, to simulate a feedback process of pressing and lifting the pressing member 200. The control module 801 is configured to perform step S601 to step S604 below.

Step S601: The control module 801 starts to output, in response to the pressure value increasing to a fifth pressure threshold, a first drive current to the first magnetic body 301, and outputs a second drive current to the second magnetic body 302, so that an attractive force is generated between the first magnetic body 301 and the second magnetic body 302, the first magnetic body 301 moves toward the second magnetic body 302, and the first drive current and the second drive current have fixed current values.

Step S602: The control module 801 maintains output of the first drive current to the first magnetic body 301 and maintains output of the second drive current to the second magnetic body 302 in response to the pressure value being greater than the fifth pressure threshold and increasing, so that the attractive force remains unchanged.

Step S603: The control module 801 maintains, in response to the pressure value reaching a maximum value and starting to decrease, the drive current outputted to one of the first magnetic body 301 and the second magnetic body 302, and changes a direction of the drive current outputted to the other, so that a repulsive force is generated between the first magnetic body 301 and the second magnetic body 302, to enable the first magnetic body 301 to move away from the second magnetic body 302.

Step S604: The control module 801 stops outputting the drive current to the first magnetic body 301 and the second magnetic body 302 in response to the pressure value decreasing to a sixth pressure threshold, so that the acting force between the first magnetic body 301 and the second magnetic body 302 is zero, where the sixth pressure threshold is less than or equal to the fifth pressure threshold.

FIG. 23 is a schematic diagram of a waveform of square wave driving according to an embodiment of this application. In FIG. 23, a horizontal coordinate is a time T, and a vertical coordinate is a magnitude of a drive current I.

As shown in FIG. 23, in some embodiments, in a phase T1 of a square wave driving:

Step S601: A fifth pressure threshold $F_5$ is not zero. A user presses the pressing member 200, and a pressing force applied to the pressing member 200 gradually increases. In response to a pressure value increasing to the fifth pressure threshold $F_5$, the control module 801 generates a corresponding first drive current and second drive current based on the pressure value corresponding to the fifth pressure threshold $F_5$. The first drive current and the second drive current each have a fixed current value, and a magnitude of the first drive current may be the same as a magnitude of the second drive current. The control module 801 outputs the first drive current to the first magnetic body 301, and outputs the second drive current to the second magnetic body 302, so that directions of the drive current in the first magnetic body 301 and the second magnetic body 302 are opposite. Both the first magnetic body 301 and the second magnetic body 302 generate magnetism, and opposite ends of the first magnetic body 301 and the second magnetic body 302 have opposite magnetic poles, and the opposite ends of the first magnetic body 301 and the second magnetic body 302 attract each other and generate a mutual attractive force. A direction of the attractive force is the same as a direction in which the pressing member 200 is pressed, so that the first magnetic body 301 may move toward the second magnetic body 302 based on an action of the attractive force. The first magnetic body 301 moves along a direction in which the pressing member 200 is pressed, and may drive the support member 100 to generate a recess deformation along a first direction.

Step S602: The user continues to press the pressing member 200, and the pressing force applied to the pressing member 200 gradually increases. In response to the pressure value being greater than the fifth pressure threshold $F_5$ and increasing, the control module 801 keeps outputting the first drive current to the first magnetic body 301, and keeps outputting the second drive current to the second magnetic body 302. At the end of the phase T1, a mutual attractive force generated between the first magnetic body 301 and the second magnetic body 302 remains unchanged, so that the recess deformation of the support member 100 along the first direction remains unchanged.

In this way, in the phase T1, the first magnetic body 301 and the second magnetic body 302 both instantly reach maximum magnetism under square wave driving, and the opposite ends of the first magnetic body 301 and the second magnetic body 302 attract each other and generate a maximum attractive force, so that the support member 100 generates a maximum position change along the first direction, and the time period of T1 is maintained until the end.

In a phase T2 of the square wave driving:
Step S603: After the user presses the pressing member 200 and then starts to lift the pressing member, the pressure applied to the pressing member 200 starts to decrease from the maximum value $F_{max}$. In response to the pressure value reaching the maximum value $F_{max}$ and starting to decrease, the control module 801 keeps the first drive current outputted to the first magnetic body 301 unchanged, and outputs a reverse second drive current to the second magnetic body 302. The direction of the drive current in the first magnetic body 301 is the same as the direction of the drive current in the second magnetic body 302, so that opposite ends of the first magnetic body 301 and the second magnetic body 302 have the same magnetic pole, and opposite ends of the first magnetic body 301 and the second magnetic body 302 repel each other and generate the repulsive force. A direction of the repulsive force is opposite to a direction in which the pressing A direction of the repulsive force is opposite to a direction in which the pressing member 200 is pressed. Based on the action of the repulsive force, the first magnetic body 301 moves in a direction away from the second magnetic body 302, to drive the support member 100 to generate a position change along the second direction. In this way, in the phase T2, the drive current of the first magnetic body 301 remains unchanged, and the magnetism generated by the first magnetic body 301 also remains unchanged. The second magnetic body 302 reversely drives the square wave current to a maximum value at a moment T2. The first magnetic body 301 and the second magnetic body 302 maintain a maximum repulsive force at the moment T2, pushing the first magnetic body 301 and the second magnetic body 302 to rapidly separate a distance, to drive the support member 100 to rapidly generate reverse protrusion deformation along the second direction.

Step S604: A sixth pressure threshold $F_6$ may be zero, or may be less than or equal to a value of the fifth pressure threshold $F_5$. The user presses and starts to lift the pressing member 200, and then continues to lift the pressing member. The pressing force applied to the pressing member 200 continues to decrease. In response to the pressure value decreasing to the sixth pressure threshold $F_6$, the control module 801 stops outputting the drive current to the first magnetic body 301 and the second magnetic body 302, and neither the first magnetic body 301 nor the second magnetic body 302 generates the magnetism, so that a mutual acting force generated by the first magnetic body 301 and the second magnetic body 302 is zero. In this way, at the end of the phase T2, no repulsive force and no attractive force exist between the first magnetic body 301 and the second magnetic body 302, and the support member 100 restores to the initial position, and no position change occurs any longer.

In this embodiment of this application, the control module 801 may adjust, based on the change of the pressure value generated by pressing the pressing member 200, the magnitude and the direction of the acting force between the first magnetic body 301 and the second magnetic body 302 more accurately, to drive the support member 100 to generate different degrees of recess deformation or protrusion deformation. The recess deformation or the protrusion deformation generated by the support member 100 drives the pressing member 200 to generate the position change, and the pressing member 200 with different position changes is fed back to the finger of the user, so that the acting force felt by the finger of the user correspondingly changes, to provide corresponding different pressing feedback effects to the user in a process of pressing the pressing member 200 at a time in a more timely manner and accurately.

In some embodiments, when the pressing member 200 is not pressed and the support member 100 is not deformed, no gap may be defined between the first magnetic body 301 and the second magnetic body 302. In this way, the first magnetic body 301 and the second magnetic body 302 only perform the repulsion action, but do not perform the attraction action.

In this scenario, the pressing feedback apparatus may provide the pressing feedback effect only when the user presses and lifts the pressing member 200, and does not provide the pressing feedback effect when the user presses the pressing member 200. In other words, when the user presses the pressing member 200, the control module 801 does not output the drive current to the first magnetic body 301 and the second magnetic body 302, and the first magnetic body 301 and the second magnetic body 302 do not perform the attraction action. When the user performs a lifting operation on the pressing member 200, the control module 801 outputs the drive current to the first magnetic body 301 and the second magnetic body 302 again, and the first magnetic body 301 and the second magnetic body 302 perform the repulsion action.

It should be noted that, for a process in which the control module 801 controls the first magnetic body 301 and the second magnetic body 302 to perform the repulsion action to provide the pressing feedback effect when the user performs the lifting operation on the pressing member 200, reference may be made to a corresponding process performed by the control module 801 when the user performs the lifting operation on the pressing member 200 provided in any one of the foregoing embodiments. Details are not described herein again.

An embodiment of this application provides a pressing feedback method, applied to the pressing feedback apparatus 40 provided in any one of the foregoing embodiments. Different pressing feedback may be provided when the pressing member 200 is subjected to different pressing forces, achieving good user experience.

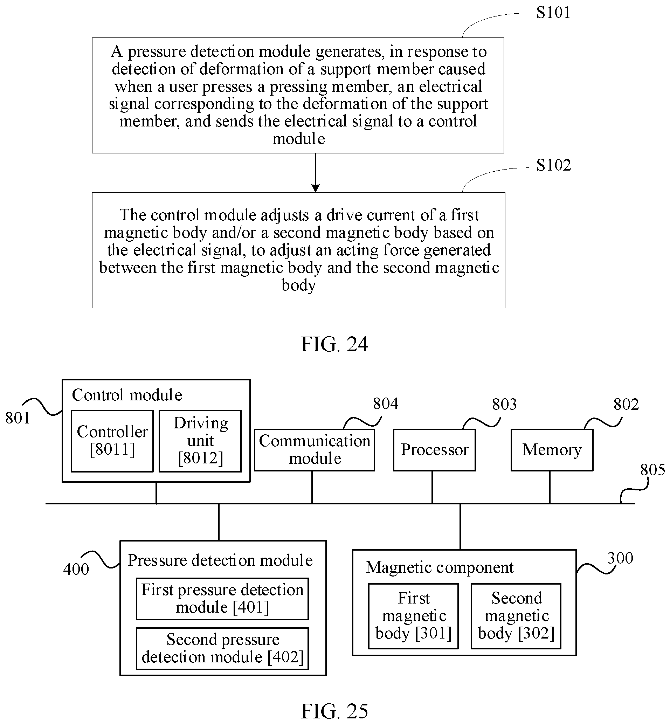

FIG. 24 is a flowchart of a pressing feedback method according to an embodiment of this application.

As shown in FIG. 24, in some embodiments, the pressing feedback method includes step S101 and step S102 below.

Step S101: A pressure detection module generates, in response to detection of deformation of a support member caused when a user presses a pressing member, an electrical signal corresponding to the deformation of the support member, and sends the electrical signal to a control module.

Step S102: The control module adjusts a drive current of a first magnetic body and/or a second magnetic body based on the electrical signal, to adjust an acting force generated between the first magnetic body and the second magnetic body.

It should be noted that, for content of step S101 and step S102, reference may be correspondingly made to content related to the pressing feedback apparatus 40 in the foregoing embodiment. Details are not described herein again.

The method provided in this embodiment of this application may simulate a mechanical button based on the pressing feedback apparatus 40, and implement pressing feedback. After the user presses and/or lifts the pressing member 200, the operation performed by the user on the pressing member causes the support member 100 to deform, and the pressure detection module 400 detects the deformation and generates a corresponding electrical signal that is sent to the control module. The control module adjusts the drive current of the first magnetic body 301 and the second magnetic body 302 based on the electrical signal, to adjust the acting force generated between the first magnetic body 301 and the second magnetic body 302. Different acting forces act on the support member 100, which may drive the support member 100 to generate a corresponding position change, and may generate different acting forces on a hand of the user, so as to provide, in a timely manner, different pressing feedback corresponding to the pressing member 200 being subjected to different pressures. In this way, under different pressing forces, the pressing feedback method can provide tactile feedback in a timely manner, achieving good user experience.

In some embodiments, in step S102, the adjusting a drive current of a first magnetic body and/or a second magnetic body based on the electrical signal may include step S201 to step S203 below.

Step S201: The control module determines, based on the electrical signal, a value of a pressure applied to the pressing member.

Step S202: The control module adjusts a magnitude of the drive current of the first magnetic body and/or the second magnetic body based on a change of the pressure value, to adjust a magnitude of the acting force, causing the support member to produce different degrees of positional changes; and/or

Step S203: The control module adjusts a direction of the drive current of the first magnetic body and/or the second magnetic body based on the change of the pressure value, to adjust a direction of the acting force, so that the support member generates position changes in different directions.

It should be noted that, for content of adjusting the drive current of the first magnetic body 301 and/or the second magnetic body 302 by the control module 801 based on the electrical signal provided in this embodiment of this application, reference may be correspondingly made to related content in the foregoing apparatus embodiment. Details are not described herein again.

In some embodiments, in step S102, the adjusting a drive current of a first magnetic body 301 and/or a second magnetic body 302 based on the electrical signal includes step S301 and step S302.

Step S301: The control module increases the drive current of the first magnetic body and/or the second magnetic body in response to the increase in the pressure value, so that the acting force is increased, to increase a position change of the support member along a same direction.

Step S302: The control module reduces the drive current of the first magnetic body and/or the second magnetic body in response to the decrease of the pressure value, so that the acting force is reduced, to decrease a position change of the support member along the same direction; and/or changes the direction of the drive current of the first magnetic body and/or the second magnetic body, to change a direction of the acting force, to cause a position change of the support member in an opposite direction.

It should be noted that, for content of adjusting the drive current of the first magnetic body 301 and/or the second magnetic body 302 by the control module 801 based on the electrical signal provided in this embodiment of this application, reference may be correspondingly made to related content in the foregoing apparatus embodiment. Details are not described herein again.

In some embodiments, still referring to FIG. 21, the control module 801 drives, through a half-cycle sine wave driving manner based on the drive current, the first magnetic body 301 and the second magnetic body 302 to perform an action of attraction or repulsion, to simulate a feedback process of pressing and lifting the pressing member 200. Based on this, the step S102 may include step S401 to step S404 below.

Step S401: The control module 801 outputs the drive current to the first magnetic body 301 and/or the second magnetic body 302 in response to the pressure value being greater than a first pressure threshold, so that an attractive force is generated between the first magnetic body 301 and the second magnetic body 302, and the attractive force enables the first magnetic body 301 to move toward the second magnetic body 302.

Step S402: The control module 801 increases the drive current of the first magnetic body 301 and/or the second magnetic body 302 in response to the pressure value being greater than the first pressure threshold and increasing, so that the attractive force generated between the first magnetic body 301 and the second magnetic body 302 is increased.

Step S403: The control module 801 reduces, in response to the pressure value reaching a maximum value and starting to decrease, the drive current of the first magnetic body 301 and the second magnetic body 302, so that the attractive force generated between the first magnetic body 301 and the second magnetic body 302 is reduced.

Step S404: The control module 801 stops outputting the drive current to the first magnetic body 301 and the second magnetic body 302 in response to the pressure value decreasing to the first pressure threshold, so that the acting force between the first magnetic body 301 and the second magnetic body 302 is zero.

It should be noted that, for content about step S401 to step S404 provided in this embodiment of this application, reference may be made to the content related to step S401 to step S404 in the foregoing apparatus embodiment. Details are not described herein again.

In some embodiments, still referring to FIG. 22, the control module 801 drives, in a positive cycle sine wave driving manner based on the drive current, the first magnetic body 301 and the second magnetic body 302 to perform an action of attraction or repulsion, to simulate a feedback process of pressing and lifting the pressing member 200. Based on this, the step S102 may include step S501 to step S506 below.

Step S501: The control module 801 outputs the drive current to the first magnetic body 301 and/or the second magnetic body 302 in response to the pressure value being greater than a second pressure threshold, so that an attractive force is generated between the first magnetic body 301 and the second magnetic body 302, to enable the first magnetic body 301 to move toward the second magnetic body 302.

Step S502: The control module 801 increases the drive current of the first magnetic body 301 and the second magnetic body 302 in response to the pressure value being greater than the second pressure threshold and increasing, so that the attractive force is increased.

Step S503: The control module 801 reduces, in response to the pressure value reaching a maximum value and starting to decrease, the drive current of one of the first magnetic body 301 and the second magnetic body 302 to a first current threshold, and maintains the drive current of the other unchanged, so that the attractive force is reduced.

Step S504: The control module 801 reversely increases the drive current of one of the first magnetic body 301 and the second magnetic body 302 in response to the pressure value decreasing to a third pressure threshold, and maintains the drive current of the other unchanged, so that a repulsive force is generated between the first magnetic body 301 and the second magnetic body 302, and the repulsive force is increased, to enable the first magnetic body 301 to move away from the second magnetic body 302.

Step S505: The control module 801 reduces the drive current of the first magnetic body 301 and the second magnetic body 302 in response to the pressure value continuing to decrease to a fourth pressure threshold, so that the repulsive force is reduced.

Step S506: The control module 801 stops outputting the drive current to the first magnetic body 301 and the second magnetic body 302 in response to the pressure value decreasing to the second pressure threshold, so that the acting force between the first magnetic body 301 and the second magnetic body 302 is zero.

It should be noted that, for content about step S501 to step S506 provided in this embodiment of this application, reference may be made to the content related to step S501 to step S506 in the foregoing apparatus embodiment. Details are not described herein again.

In some embodiments, still referring to FIG. 23, the control module 801 drives, in a driving manner of a square wave based on the drive current, the first magnetic body 301 and the second magnetic body 302 to perform an action of attraction or repulsion, to simulate a feedback process of pressing and lifting the pressing member 200. Based on this, the step S102 may include step S601 to step S604 below.

Step S601: The control module 801 starts to output, in response to the pressure value increasing to a fifth pressure threshold, a first drive current to the first magnetic body 301, and outputs a second drive current to the second magnetic body 302, so that an attractive force is generated between the first magnetic body 301 and the second magnetic body 302, the first magnetic body 301 moves toward the second magnetic body 302, and the first drive current and the second drive current have fixed current values.

Step S602: The control module 801 maintains output of the first drive current to the first magnetic body 301 and maintains output of the second drive current to the second magnetic body 302 in response to the pressure value being greater than the fifth pressure threshold and increasing, so that the attractive force remains unchanged.

Step S603: The control module 801 maintains, in response to the pressure value reaching a maximum value and starting to decrease, the drive current outputted to one of the first magnetic body 301 and the second magnetic body 302, and changes a direction of the drive current outputted to the other, so that a repulsive force is generated between the first magnetic body 301 and the second magnetic body 302, to enable the first magnetic body 301 to move away from the second magnetic body 302.

Step S604: The control module 801 stops outputting the drive current to the first magnetic body 301 and the second magnetic body 302 in response to the pressure value decreasing to a sixth pressure threshold, so that the acting force between the first magnetic body 301 and the second magnetic body 302 is zero, where the sixth pressure threshold is less than or equal to the fifth pressure threshold.

It should be noted that, for content about step S601 to step S604 provided in this embodiment of this application, reference may be made to the content related to step S601 to step S604 in the foregoing apparatus embodiment. Details are not described herein again.

In some embodiments, step S101 may include step S701 and step S702 below.

Step S701: The first pressure detection module generates a first electrical signal corresponding to the deformation of the support member, and sends the first electrical signal to a control module.

Step S702: The second pressure detection module generates a second electrical signal corresponding to the deformation of the support member, and sends the second electrical signal to a control module.

In step S102, that the control module determines a value of a pressure applied to the pressing member based on the electrical signal includes: The control module determines the value of the pressure applied to the pressing member based on the first electrical signal and the second electrical signal.

The pressure detection module 400 may include a first pressure detection module 401 and a second pressure detection module 402. The first pressure detection module 401 sends a generated electrical signal to the control module 801 and the second pressure detection module 402 sends a generated electrical signal to the control module, respectively. The control module 801 correspondingly determines two groups of pressure values based on two groups of electrical signals, and adds the two groups of pressure values to serve as a total pressure value. The control module 801 determines a drive current based on the total pressure value. In this way, electrical signals generated by the pressure detection modules 400 at different positions can accurately represent pressures of the pressing member 200, so that the control module 801 can accurately input the drive current to the first magnetic body 301 and the second magnetic body 302, and the first magnetic body 301 and the second magnetic body 302 can accurately attract or repel each other, and generate acting forces of different magnitudes and directions, to provide corresponding pressing feedback when the pressing member 200 is pressed or when the pressing member 200 is pressed and lifted. Correspondingly, for a process in which the control module 801 drives the first magnetic body 301 and the second magnetic body 302 based on the drive current, so that acting forces of different magnitudes and/or directions are generated between the first magnetic body 301 and the second magnetic body 302, to drive the support member 100 to generate a position change, reference may be made to content provided in the apparatus embodiments. Details are not described herein again.

The embodiments provided in this application describe solutions of the pressing feedback apparatus and the pressing feedback method provided in this application. It may be understood that to implement the foregoing functions, the pressing feedback apparatus includes a corresponding hardware structure and/or software module for performing each function. A person skilled in the art should be easily aware that, the units and algorithm steps in the examples described with reference to embodiments disclosed in this specification may be implemented by hardware or a combination of hardware and computer software in this application. Whether a function is performed by hardware or computer software driving hardware depends on particular applications and design constraints of the technical solutions. A person skilled in the art may use different methods to implement the described functions for each specific application, but it is not to be considered that the implementation goes beyond the scope of this application.

FIG. 25 is a structural block diagram of an electronic device according to an embodiment of this application. In an embodiment, the electronic device may implement a corresponding function through a hardware apparatus shown in FIG. 25. As shown in FIG. 25, the electronic device may include a control module 801, a memory 802, a processor 803, a communication module 804, a magnetic component 300 and a pressure detection module 400. The foregoing devices may be connected through one or more communication buses 805.

In an embodiment, the control module 801 includes a controller 8011 and a driving unit 8012. The controller 8011 is configured to determine a pressure value of the pressing member 200 based on the electrical signal sent by the pressure detection module 400, and adjust the drive current based on the pressure value. The controller 8011 sends the drive current to the driving unit 8012. The driving unit 8012 inputs the drive current to the magnetic component 300. The magnetic component 300 includes a first magnetic body 301 and a second magnetic body 302. The driving unit 8012 causes the first magnetic body 301 and the second magnetic body 302 to generate acting forces having different magnitudes and/or directions. The pressure detection module 400 includes a first pressure detection module 401 and a second pressure detection module 402. The processor 803 may include one or more processing units. For example, the processor 803 may include an application processor, a modem processor, a graphics processor, an image signal processor, a controller, a video codec, a digital signal processor, a baseband processor, a neural network processor, and/or the like. Different processing units may be devices independent of each other, or may be integrated in one or more processors. The memory 802 is coupled to the processor 803, and is configured to store various software programs and/or a plurality of groups of instructions. The memory 802 may include a volatile memory and/or a nonvolatile memory.

When executed by the processor 803, the software program and/or a plurality of groups of instructions in the memory 802 cause the electronic device to implement step S101 and step S102 of the method.

The electronic device provided in embodiments of this application may simulate a mechanical button, and implement pressing feedback. After the user presses and/or lifts the pressing member 200, the operation performed by the user on the pressing member causes the support member 100 to deform, and the pressure detection module 400 detects the deformation and generates a corresponding electrical signal that is sent to the control module. The control module adjusts the drive current of the first magnetic body 301 and the second magnetic body 302 based on the electrical signal, to adjust the acting force generated between the first magnetic body 301 and the second magnetic body 302. Different acting forces act on the support member 100, which may drive the support member 100 to generate a corresponding position change, and may generate different acting forces on a hand of the user, so as to provide, in a timely manner, different pressing feedback corresponding to the pressing member 200 being subjected to different pressures. In this way, under different pressing forces, the pressing feedback apparatus 40 can be used to provide the tactile feedback in a timely manner, achieving good user experience.

When executed by the processor 803, the software program and/or a plurality of groups of instructions in the memory 802 cause the electronic device to implement step S201 to step S203 of the method. In this way, the control module may determine different magnitude of drive current based on different pressure values, and may determine whether the pressing member 200 is in a phase of being pressed or a phase of being lifted after being pressed based on the change of the pressure value, to adjust the magnitude and the direction of the drive current of the first magnetic body and/or the second magnetic body. Further, the control module may change the magnitude and the direction of the acting force between the first magnetic body 301 and the second magnetic body 302, to provide different pressing feedback.

When executed by the processor 803, the software program and/or a plurality of groups of instructions in the memory 802 cause the electronic device to implement step S301 and step S302 of the method. In this way, corresponding pressing feedback when the pressing member 200 is pressed may be provided, and/or corresponding pressing feedback when the pressing member 200 is pressed and lifted may be provided.

When executed by the processor 803, the software program and/or a plurality of groups of instructions in the memory 802 cause the electronic device to implement step S401 to step S404 of the method below. In this way, the magnitude and direction of the acting force generated between the first magnetic body and the second magnetic body may be changed in real time based on the change of the pressure value, to provide different pressing feedback effects to the user in real time.

When executed by the processor 803, the software program and/or a plurality of groups of instructions in the memory 802 cause the electronic device to implement step S501 to step S506 of the method. In this way, the process of changing the pressure value generated by pressing the pressing member 200 is divided into a plurality of phases, so that the magnitude and the direction of the acting force between the first magnetic body and the second magnetic body can be adjusted more accurately based on the change of the pressure value, to provide corresponding different pressing feedback in a process of pressing the pressing member 200 to the user at a time in a more timely manner and accurately.

When executed by the processor 803, the software program and/or a plurality of groups of instructions in the memory 802 cause the electronic device to implement step S601 to step S604 of the method. In this way, the magnitude and the direction of the acting force between the first magnetic body and the second magnetic body can be adjusted more accurately based on the change of the pressure value generated by pressing the pressing member 200, so as to provide corresponding different pressing feedback in the process of pressing the pressing member 200 to the user at a time in a more timely manner and accurately.

When executed by the processor 803, the software program and/or the plurality of groups of instructions in the memory 802 cause the electronic device to implement step S701 and step S702 of the method. In addition, that the control module determines a value of a pressure applied to the pressing member based on the electrical signal includes: The control module determines the value of the pressure applied to the pressing member based on the first electrical signal and the second electrical signal. In this way, electrical signals generated by the pressure detection modules 400 at different positions can accurately represent pressures of the pressing member 200, so that the control module can accurately input the drive current to the first magnetic body 301 and the second magnetic body 302, and the first magnetic body 301 and the second magnetic body 302 can accurately attract or repel each other, and generate acting forces of different magnitudes and directions. The corresponding pressing feedback is provided when the pressing member 200 is pressed or when the pressing member 200 is pressed and lifted.

It should be noted that a person skilled in the art can easily figure out another implementation solution of this application after considering the specification and practicing this application that is disclosed herein. This application is intended to cover any variations, usages, or adaptive changes of this application. These variations, usages, or adaptive changes follow the general principles of this application and include common general knowledge or common technical means in the technical field not disclosed in this application. The specification and the embodiments are considered as merely exemplary, and the scope of this application is pointed out in the following claims.

It should be understood that this application is not limited to the precise structures described above and shown in the accompanying drawings, and various modifications and changes can be made without departing from the scope of this application. The scope of this application is subject only to the appended claims.

**Claims**

1.  A pressing feedback apparatus, applied to an electronic device, wherein the electronic device comprises a middle frame (10) that defines an accommodating cavity (11), the middle frame (10) is provided with an assembly hole (12), the assembly hole (12) is in communication with the accommodating cavity (11), and the pressing feedback apparatus comprises:

    a support member (100), wherein two ends of the support member (100) are configured to be fixed to a periphery of the assembly hole (12);
    a pressing member (200), arranged on a side of the support member (100) facing away from the accommodating cavity (11);
    a magnetic component (300), located in the accommodating cavity (11), wherein the magnetic component (300) comprises a first magnetic body (301) and a second magnetic body (302), the first magnetic body (301) is arranged on a side of the support member (100) facing away from the pressing member (200), and the second magnetic body (302) is arranged on a side of the first magnetic body (301) facing away from the support member (100), and is opposite to the first magnetic body (301), and the second magnetic body (302) is fixedly arranged relative to the middle frame (10);
    a pressure detection module (400), arranged on the support member (100), wherein the pressure detection module (400) is configured to generate an electrical signal corresponding to deformation of the support member (100); and
    a control module, electrically connected to the pressure detection module (400), and electrically connected to at least one of the first magnetic body (301) or the second magnetic body (302), wherein the control module is configured to adjust a drive current of the first magnetic body (301) and/or the second magnetic body (302) based on the electrical signal, to adjust an acting force generated between the first magnetic body (301) and the second magnetic body (302).

2.  The pressing feedback apparatus according to claim 1, wherein
    when the pressing member (200) is not subjected to a pressure, the second magnetic body (302) and the first magnetic body (301) are spaced apart from each other and oppositely arranged.

3.  The pressing feedback apparatus according to claim 2, wherein the control module is configured to determine, based on the electrical signal, a value of a pressure applied to the pressing member (200);

    the control module is configured to adjust a magnitude of the drive current of the first magnetic body (301) and/or the second magnetic body (302) based on a change of the pressure value, to adjust a magnitude of the acting force; and/or
    the control module is configured to adjust a direction of the drive current of the first magnetic body (301) and/or the second magnetic body (302) based on the change of the pressure value, to adjust a direction of the acting force.

4. The pressing feedback apparatus according to claim 3, wherein

the control module is configured to increase, in response to an increase in the pressure value, the drive current of the first magnetic body (301) and/or the second magnetic body (302), to increase the acting force; and
the control module is configured to reduce, in response to a decrease in the pressure value, the drive current of the first magnetic body (301) and/or the second magnetic body (302), to reduce the acting force, and/or change the direction of the drive current of the first magnetic body (301) and/or the second magnetic body (302), to change the direction of the acting force.

5. The pressing feedback apparatus according to claim 4, wherein the control module is configured to:

output the drive current to the first magnetic body (301) and/or the second magnetic body (302) in response to the pressure value being greater than a first pressure threshold, so that an attractive force is generated between the first magnetic body (301) and the second magnetic body (302), to enable the first magnetic body (301) to move toward the second magnetic body (302);
increase the drive current of the first magnetic body (301) and/or the second magnetic body (302) in response to the pressure value being greater than the first pressure threshold and increasing, so that the attractive force is increased;
reduce the drive current of the first magnetic body (301) and/or the second magnetic body (302) in response to the pressure value reaching a maximum value and starting to decrease, so that the attractive force is reduced; and
stop outputting the drive current to the first magnetic body (301) and the second magnetic body (302) in response to the pressure value decreasing to the first pressure threshold, so that the acting force between the first magnetic body (301) and the second magnetic body (302) is zero.

6. The pressing feedback apparatus according to claim 4, wherein the control module is configured to:

output the drive current to the first magnetic body (301) and the second magnetic body (302) in response to the pressure value being greater than a second pressure threshold, so that an attractive force is generated between the first magnetic body (301) and the second magnetic body (302), to enable the first magnetic body (301) to move toward the second magnetic body (302);
increase the drive current of the first magnetic body (301) and the second magnetic body (302) in response to the pressure value being greater than the second pressure threshold and increasing, so that the attractive force is increased;
reduce, in response to the pressure value reaching a maximum value and starting to decrease, the drive current of one of the first magnetic body (301) or the second magnetic body (302) to a first current threshold, and maintain the drive current of the other unchanged, so that the attractive force is reduced;
reversely increase the drive current of one of the first magnetic body (301) or the second magnetic body (302) in response to the pressure value decreasing to a third pressure threshold, and maintain the drive current of the other unchanged, so that a repulsive force is generated between the first magnetic body (301) and the second magnetic body (302), and the repulsive force is increased, to enable the first magnetic body (301) to move away from the second magnetic body (302);
reduce the drive current of the first magnetic body (301) and the second magnetic body (302) in response to the pressure value continuing to decrease to a fourth pressure threshold, so that the repulsive force is reduced; and
stop outputting the drive current to the first magnetic body (301) and the second magnetic body (302) in response to the pressure value decreasing to the second pressure threshold, so that the acting force between the first magnetic body (301) and the second magnetic body (302) is zero.

7. The pressing feedback apparatus according to claim 3, wherein the control module is configured to:

output a first drive current to the first magnetic body (301) and output a second drive current to the second magnetic body (302) in response to the pressure value increasing to a fifth pressure threshold, so that an attractive force is generated between the first magnetic body (301) and the second magnetic body (302), the first magnetic body (301) moves toward the second magnetic body (302), and the first drive current and the second drive current have fixed current values;
maintaining output of the first drive current to the first magnetic body (301) and maintaining output of the second drive current to the second magnetic body (302) in response to the pressure value being greater than the fifth pressure threshold and increasing, so that the attractive force remains unchanged;

maintain, in response to the pressure value reaching a maximum value and starting to decrease, the drive current outputted to one of the first magnetic body (301) or the second magnetic body (302), and change a direction of the drive current outputted to the other, so that a repulsive force is generated between the first magnetic body (301) and the second magnetic body (302), and the first magnetic body (301) moves away from the second magnetic body (302); and

stop outputting the drive current to the first magnetic body (301) and the second magnetic body (302) in response to the pressure value decreasing to a sixth pressure threshold, so that the acting force between the first magnetic body (301) and the second magnetic body (302) is zero, wherein the sixth pressure threshold is less than or equal to the fifth pressure threshold.

8. The pressing feedback apparatus according to claim 1, wherein

the magnetic component (300) further comprises a housing (303), and the housing (303) is fixedly arranged relative to the middle frame (10); and
the second magnetic body (302) is fixedly arranged in the housing (303).

9. The pressing feedback apparatus according to claim 8, wherein

the housing (303) and the support member (100) define a cavity (304); and
the first magnetic body (301) and the second magnetic body (302) are located in the cavity (304).

10. The pressing feedback apparatus according to claim 8 or 9, wherein

the pressing member (200) comprises two guide posts (201); and
the two guide posts (201) are respectively arranged on two ends of the pressing member (200) along a length direction of the support member (100), and the pressing member (200) is fixed to the support member (100) through the two guide posts (201).

11. The pressing feedback apparatus according to claim 8, wherein

the magnetic component (300) further comprises two fixing members (305); and
the two fixing members (305) are respectively arranged on two ends of the housing (303) along a length direction of the support member (100), and the housing (303) is fixed to the two ends of the support member (100) through the two fixing members (305).

12. The pressing feedback apparatus according to any one of claims 1 to 11, wherein

the support member (100) comprises a first cantilever beam (103), a second cantilever beam (104), and a support (105);
the support (105) is located between the first cantilever beam (103) and the second cantilever beam (104), one end of the first cantilever beam (103) is fixed to one end of the assembly hole, and an other end of the first cantilever beam (103) is connected to the support (105); and one end of the second cantilever beam (104) is fixed to an other end of the assembly hole, and an other end of the second cantilever beam (104) is connected to the support (105); and
the first magnetic body (301) is fixed to the support (105).

13. The pressing feedback apparatus according to any one of claims 1 to 12, wherein
the pressure detection module (400) comprises a first pressure detection module (401) and a second pressure detection module (402), and the first pressure detection module (401) and the second pressure detection module (402) are respectively located on two ends of the support member (100) in the length direction.

14. A pressing feedback method, applied to the pressing feedback apparatus according to any one of claims 1 to 13, wherein the method comprises:

generating, by the pressure detection module in response to detection of deformation of the support member caused when a user presses the pressing member, an electrical signal corresponding to the deformation of the support member, and sending the electrical signal to the control module; and
adjusting, by the control module, a drive current of the first magnetic body and/or the second magnetic body based on the electrical signal, to adjust the acting force generated between the first magnetic body and the second magnetic body.

15. The pressing feedback method according to claim 14, wherein

the control module adjusting a drive current of the first magnetic body and/or the second magnetic body based on the electrical signal comprises:

determining, by the control module based on the electrical signal, a value of a pressure applied to the pressing member;
adjusting, by the control module, a magnitude of the drive current of the first magnetic body and/or the second magnetic body based on a change of the pressure value, to adjust a magnitude of the acting force; and/or
adjusting, by the control module, a direction of the drive current of the first magnetic body and/or the second magnetic body based on the change of the pressure value, to adjust a direction of the acting force.

16. The pressing feedback method according to claim 14, wherein
the control module adjusting a drive current of the first magnetic body and/or the second magnetic body based on the electrical signal comprises:

increasing, by the control module, the drive current of the first magnetic body and/or the second magnetic body in response to an increase in the pressure value, to increase the acting force; and
reducing, by the control module, the drive current of the first magnetic body and/or the second magnetic body in response to a decrease in the pressure value, to reduce the acting force, and/or changing the direction of the drive current of the first magnetic body and/or the second magnetic body, to change the direction of the acting force.

17. The pressing feedback method according to claim 16, wherein
the control module adjusting a drive current of the first magnetic body and/or the second magnetic body based on the electrical signal, to adjust the acting force generated between the first magnetic body and the second magnetic body comprises:

outputting, by the control module, the drive current to the first magnetic body and/or the second magnetic body in response to the pressure value being greater than a first pressure threshold, so that an attractive force is generated between the first magnetic body and the second magnetic body, to enable the first magnetic body to move toward the second magnetic body;
increasing, by the control module, the drive current of the first magnetic body and/or the second magnetic body in response to the pressure value being greater than the first pressure threshold and increasing, so that the attractive force is increased;
reducing, by the control module, the drive current of the first magnetic body and/or the second magnetic body in response to the pressure value reaching a maximum value and starting to decrease, so that the attractive force is reduced; and
stop outputting, by the control module, the drive current to the first magnetic body and the second magnetic body in response to the pressure value decreasing to the first pressure threshold, so that the acting force between the first magnetic body and the second magnetic body is zero.

18. The pressing feedback method according to claim 16, wherein
the control module adjusting a drive current of the first magnetic body and/or the second magnetic body based on the electrical signal, to adjust the acting force generated between the first magnetic body and the second magnetic body comprises:

outputting, by the control module, the drive current to the first magnetic body and the second magnetic body in response to the pressure value being greater than a second pressure threshold, so that an attractive force is generated between the first magnetic body and the second magnetic body, to enable the first magnetic body to move toward the second magnetic body;
increasing, by the control module, the drive current of the first magnetic body and the second magnetic body in response to the pressure value being greater than the second pressure threshold and increasing, so that the attractive force is increased;
reducing, by the control module in response to the pressure value reaching a maximum value and starting to decrease, the drive current of one of the first magnetic body or the second magnetic body to a first current threshold, and maintaining the drive current of the other, so that the attractive force is reduced;
reversely increasing the drive current of one of the first magnetic body or the second magnetic body in response to the pressure value decreasing to a third pressure threshold, and maintaining the drive current of the other, so that a repulsive force is generated between the first magnetic body and the second magnetic body, and the repulsive force is increased, to enable the first magnetic body to move away from the second magnetic body;
reducing the drive current of the first magnetic body and the second magnetic body in response to the pressure value continuing to decrease to a fourth pressure threshold, so that the repulsive force is reduced; and

stop outputting, by the control module, the drive current to the first magnetic body and the second magnetic body in response to the pressure value decreasing to the second pressure threshold, so that the acting force between the first magnetic body and the second magnetic body is zero.

19. The pressing feedback method according to claim 15, wherein
the control module adjusting a drive current of the first magnetic body and/or the second magnetic body based on the electrical signal, to adjust the acting force generated between the first magnetic body and the second magnetic body comprises:

outputting, by the control module in response to the pressure value increasing to a fifth pressure threshold, a first drive current to the first magnetic body, and outputting a second drive current to the second magnetic body, so that an attractive force is generated between the first magnetic body and the second magnetic body, the first magnetic body moves toward the second magnetic body, and the first drive current and the second drive current have fixed current values;
maintaining, by the control module in response to the pressure value being greater than the fifth pressure threshold and increasing, output of the first drive current to the first magnetic body, and maintaining output of the second drive current to the second magnetic body, so that the attractive force remains unchanged;
maintaining, by the control module in response to the pressure value reaching a maximum value and starting to decrease, output of the drive current to one of the first magnetic body or the second magnetic body, and changing a direction of the drive current outputted to the other, so that a repulsive force is generated between the first magnetic body and the second magnetic body, and the first magnetic body moves away from the second magnetic body; and
stopping outputting, by the control module in response to the pressure value decreasing to a sixth pressure threshold, the drive current to the first magnetic body and the second magnetic body, so that the acting force between the first magnetic body and the second magnetic body is zero, wherein the sixth pressure threshold is less than or equal to the fifth pressure threshold.

20. The pressing feedback method according to claim 15, wherein
the generating, by the pressure detection module, an electrical signal corresponding to the deformation of the support member, and sending the electrical signal to a control module comprises:

generating, by the first pressure detection module, a first electrical signal corresponding to the deformation of the support member, and sending the first electrical signal to the control module; and
generating, by the second pressure detection module, a second electrical signal corresponding to the deformation of the support member, and sending the second electrical signal to the control module; and
the determining, by the control module based on the electrical signal, a value of a pressure applied to the pressing member comprises:
determining, by the control module based on the first electrical signal and the second electrical signal, the value of the pressure applied to the pressing member.

21. An electronic device, comprising:

a middle frame (10), wherein the middle frame (10) defines an accommodating cavity (11), and the middle frame (10) is provided with an assembly hole (12);
a display screen (20) and a rear housing, arranged on two opposite sides of the middle frame (10); and
the pressing feedback apparatus according to any one of claims 1 to 13, wherein two ends of a support member (100) of the pressing feedback apparatus are fixed to a periphery of the assembly hole (12).

22. An electronic device, comprising:
a memory and a processor, wherein the memory stores program instructions, and the program instructions, when executed by the processor, enable the electronic device to perform the pressing feedback method according to any one of claims 14 to 20.

100A

FIG. 1

30

(a)

(b)

FIG. 2

<u>40</u>

FIG. 3

<u>40</u>

FIG. 4

FIG. 5

40

FIG. 6

A-A

FIG. 7

300 { 301 302 303 304 305 }   400 { 401 402 }

FIG. 8

FIG. 9

FIG. 10

FIG. 11

40

y

z

103   200   104

B   B

603   300/303   604

FIG. 12

B-B

y

x

200

103   104

201   105   101   201

603 401   3031   601   102   602   402 604
305   305
303   3012 3011   3021 3022   304
301   302

100 { 101
102
103
104
105   300 { 301
302
303
304
305   400 { 401
402

FIG. 13

y

z

103   501   105   502   104

503   504

401   301   402
3011 3012

100 { 103
104
105   400 { 401
402

FIG. 14

FIG. 15

FIG. 16

FIG. 17

FIG. 18

FIG. 19

301

302

(a)                              (b)

## FIG. 20

301

302

$F_1$          $F_{max}$          $F_1$

## FIG. 21

FIG. 22

FIG. 23

S101

A pressure detection module generates, in response to detection of deformation of a support member caused when a user presses a pressing member, an electrical signal corresponding to the deformation of the support member, and sends the electrical signal to a control module

S102

The control module adjusts a drive current of a first magnetic body and/or a second magnetic body based on the electrical signal, to adjust an acting force generated between the first magnetic body and the second magnetic body

FIG. 24

801

Control module

Controller [8011]    Driving unit [8012]

804

Communication module

803

Processor

802

Memory

805

400

Pressure detection module

First pressure detection module [401]

Second pressure detection module [402]

Magnetic component

First magnetic body [301]    Second magnetic body [302]

300

FIG. 25

## INTERNATIONAL SEARCH REPORT

| International application No. |
|---|
| **PCT/CN2023/129397** |

**A. CLASSIFICATION OF SUBJECT MATTER**

G06F3/01(2006.01)i

According to International Patent Classification (IPC) or to both national classification and IPC

**B. FIELDS SEARCHED**

Minimum documentation searched (classification system followed by classification symbols)

IPC:G06F3/-

Documentation searched other than minimum documentation to the extent that such documents are included in the fields searched

Electronic data base consulted during the international search (name of data base and, where practicable, search terms used)

CNABS, CNTXT, ENTXTC, ENTXT, WPABS, WPABSC, VEN, CJFD: 荣耀终端有限公司, 王雷, 朱建伟, 按压, 按, 压, 触, 反馈, 中框, 中板, 中壳, 支撑, 支承, 承载, 磁, 压力, 形变, 变形, 驱动, 电流, press+, feedback, midframe, cavity, support+, magnetic, pressure, deformat+, control+, driv+, current

**C. DOCUMENTS CONSIDERED TO BE RELEVANT**

| Category* | Citation of document, with indication, where appropriate, of the relevant passages | Relevant to claim No. |
|---|---|---|
| A | CN 113342211 A (JIANGXI OMS MICROELECTRONICS CO., LTD.) 03 September 2021 (2021-09-03)<br>description, paragraphs [0032]-[0058], and figures 1-5 | 1-22 |
| A | CN 113568507 A (GOERTEK OPTICAL TECHNOLOGY CO., LTD.) 29 October 2021 (2021-10-29)<br>entire document | 1-22 |
| A | CN 102832067 A (ZHUHAI G.TECH TECHNOLOGY LTD.) 19 December 2012 (2012-12-19)<br>entire document | 1-22 |
| A | CN 202815724 U (LENOVO (BEIJING) CO., LTD.) 20 March 2013 (2013-03-20)<br>entire document | 1-22 |
| A | CN 217955707 U (HONOR DEVICE CO., LTD.) 02 December 2022 (2022-12-02)<br>entire document | 1-22 |
| A | CN 109828669 A (HUAWEI TECHNOLOGIES CO., LTD.) 31 May 2019 (2019-05-31)<br>entire document | 1-22 |

☑ Further documents are listed in the continuation of Box C.　　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **06 December 2023** | **14 December 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

International application No.

**PCT/CN2023/129397**

### C.    DOCUMENTS CONSIDERED TO BE RELEVANT

| Category* | Citation of document, with indication, where appropriate, of the relevant passages | Relevant to claim No. |
|---|---|---|
| A | CN 219418855 U (BEIJING XIAOMI MOBILE SOFTWARE CO., LTD.) 25 July 2023 (2023-07-25)<br>entire document | 1-22 |
| A | CN 112558780 A (JIANGXI OMS MICROELECTRONICS CO., LTD.) 26 March 2021 (2021-03-26)<br>entire document | 1-22 |
| A | CN 110134238 A (OPPO (CHONGQING) INTELLIGENT TECHNOLOGY CO., LTD.) 16 August 2019 (2019-08-16)<br>entire document | 1-22 |
| A | CN 111930237 A (SHANGHAI AVIC OPTOELECTRONICS CO., LTD.) 13 November 2020 (2020-11-13)<br>entire document | 1-22 |
| A | KR 20110036142 A (KOREA ADVANCED INSTITUTE OF SCIENCE AND TECHNOLOGY) 07 April 2011 (2011-04-07)<br>entire document | 1-22 |
| A | US 2015227207 A1 (MICROSOFT TECHNOLOGY LICENSING L.L.C.) 13 August 2015 (2015-08-13)<br>entire document | 1-22 |

Form PCT/ISA/210 (second sheet) (July 2022)

EP 4 782 967 A1

**INTERNATIONAL SEARCH REPORT**
Information on patent family members

International application No.

**PCT/CN2023/129397**

| Patent document cited in search report | | | Publication date (day/month/year) | Patent family member(s) | | | Publication date (day/month/year) |
|---|---|---|---|---|---|---|---|
| CN | 113342211 | A | 03 September 2021 | None | | | |
| CN | 113568507 | A | 29 October 2021 | WO | 2023001236 | A1 | 26 January 2023 |
| CN | 102832067 | A | 19 December 2012 | CN | 102832067 | B | 27 January 2016 |
| CN | 202815724 | U | 20 March 2013 | None | | | |
| CN | 217955707 | U | 02 December 2022 | None | | | |
| CN | 109828669 | A | 31 May 2019 | WO | 2020155874 | A1 | 06 August 2020 |
| | | | | CN | 109828669 | B | 31 December 2021 |
| CN | 219418855 | U | 25 July 2023 | None | | | |
| CN | 112558780 | A | 26 March 2021 | None | | | |
| CN | 110134238 | A | 16 August 2019 | None | | | |
| CN | 111930237 | A | 13 November 2020 | None | | | |
| KR | 20110036142 | A | 07 April 2011 | KR | 101036616 | B1 | 24 May 2011 |
| US | 2015227207 | A1 | 13 August 2015 | US | 9448631 | B2 | 20 September 2016 |
| | | | | US | 2017102770 | A1 | 13 April 2017 |
| | | | | US | 10359848 | B2 | 23 July 2019 |

Form PCT/ISA/210 (patent family annex) (July 2022)